# EUROPEAN PATENT APPLICATION

(11) **EP 4 800 465 A1**
(43) Date of publication of application: **02.09.2026**
(21) Application number: 24882291.8
(22) Date of filing: 17.10.2024
(51) Int. Cl.: G02F 1/13, G02F 1/1334

(54) **LIGHT MODULATION SHEET AND RAILWAY VEHICLE WINDOW**

(30) Priority: 24.10.2023 JP 2023182799
(71) Applicant: Toppan Holdings Inc., Tokyo 110-0016 (JP)
(72) Inventor: ENYA Taisuke, Tokyo 110-0016 (JP); KIKKAWA Takuho, Tokyo 110-0016 (JP)
(74) Representative: TBK
(86) International application number: PCT/JP2024/037070
(87) International publication number: WO 2025/089178

(57) **Abstract**

The mass content of a liquid crystal compound relative to that of a light control layer is 40 mass% or more and 65 mass% or less. The mass content of sulfur atoms relative to that of a transparent polymer layer is 0.03 mass% or more and 4 mass% or less. The transparent polymer layer contains a polymer compound expressed by Chemical Formula (1) in which X does not include a cyclic structure. In Chemical Formula (1), n is an integer greater than or equal to 1, m is an integer between 1 and 4, and X is straight or branched and includes no functional group or includes at least one of or both of an ether group and an ester group as a functional group.

## Description

### [Technical Field]

The present disclosure relates to light control sheets and vehicle windows including light control sheets.

### [Background Art]

A light control sheet includes a first transparent electrode layer, a second transparent electrode layer, and a light control layer sandwiched between the first transparent electrode layer and the second transparent electrode layer. The alignment state of a liquid crystal mixture contained in the light control layer changes light transmittance of the light control sheet in response to change in potential difference between the two transparent electrode layers. For example, when the alignment order of a liquid crystal compound is established, the light control sheet may exhibit low diffuse transmittance, thereby appearing transparent. When the long axes in a liquid crystal mixture are disordered, the light control sheet may exhibit high diffuse transmittance, thereby appearing opaque (e.g., see PTL 1).

### [Citation List]

### [Patent Literature]

PTL 1: JP201845135A

### [Summary of the Invention]

### [Technical Problem]

Application of light control sheets is not limited to transparent components included in various buildings, but is also expanding to window glass included in vehicles. Light control sheets for vehicles are required to be operated in cold regions, and therefore are required to change their diffuse transmittance within a predetermined period of time under a low-temperature environment. Furthermore, light control sheets for vehicles are required to have high contrast in order to satisfy both visibility when transparent and confidentiality when opaque. Increase in content of a liquid crystal mixture in a light control layer tends to change diffusion transmittance in the light control sheet and tends to scatter light when opaque, while reducing adhesion between the light control layer and the layer contacting the light control layer.

### [Solution to Problems]

In an aspect, a light control sheet includes a first transparent conductive sheet, a second transparent conductive sheet, and a light control layer located between the first transparent conductive sheet and the second transparent conductive sheet. The light control sheet is configured to switch between a transparent state in which the light control layer appears to be transparent and an opaque state in which the light control layer appears to be opaque by switching between application and non-application of a voltage between the first and second transparent conductive sheets. The light control layer includes a transparent polymer layer that defines a plurality of voids, and a liquid crystal composition that contains at least one liquid crystal compound and is filled in the voids. The mass content of the liquid crystal compound relative to that of the light control layer is 40 mass% or more and 65 mass% or less. The mass content of sulfur atoms relative to that of the transparent polymer layer is 0.03 mass% or more and 4 mass% or less. The transparent polymer layer contains a polymer compound expressed by the following Chemical Formula (1) in which X does not include a cyclic structure.

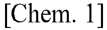

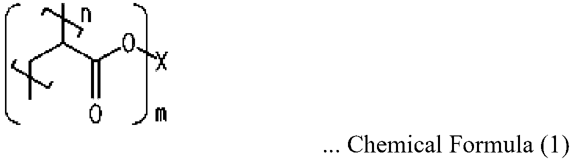

In Chemical Formula (1), n is an integer greater than or equal to 1, m is an integer between 1 and 4, and X is straight or branched and includes no functional group or includes at least one of or both of an ether group and an ester group as a functional group.

In an aspect, a vehicle window includes a light control sheet and a transparent component to which the light control sheet is attached.

### [Brief Description of the Drawings]

Fig. 1 is a cross-sectional view illustrating the structure of a light control device including a normal-type light control sheet.
Fig. 2 is a cross-sectional view illustrating the structure of a light control device including a reverse-type light control sheet.
Fig. 3 is a cross-sectional view illustrating the structure of a vehicle window including a normal-type light control sheet.
Fig. 4 is a cross-sectional view illustrating the structure of a reverse-type light control sheet.
Fig. 5 shows a table indicating formulation ratios and evaluation results for coating liquids of respective Examples.
Fig. 6 shows a table indicating formulation ratios and evaluation results for coating liquids of respective Examples.
Fig. 7 shows a table indicating formulation ratios and evaluation results for coating liquids of respective Examples.
Fig. 8 shows a table indicating formulation ratios and evaluation results for coating liquids of respective Examples.
Fig. 9 shows a table indicating formulation ratios and evaluation results for coating liquids of respective Examples.
Fig. 10 shows a table indicating formulation ratios and evaluation results for coating liquids of respective Examples.
Fig. 11 shows a table indicating formulation ratios and evaluation results for coating liquids of respective Examples.
Fig. 12 shows a table indicating formulation ratios and evaluation results for coating liquids of respective Examples.
Fig. 13 shows a table indicating formulation ratios and evaluation results for coating liquids of respective Examples.
Fig. 14 shows a table indicating formulation ratios and evaluation results for coating liquids of respective Examples.
Fig. 15 shows a table indicating formulation ratios and evaluation results for coating liquids of respective Examples.
Fig. 16 shows a table indicating formulation ratios and evaluation results for coating liquids of respective examples.
Fig. 17 shows a table indicating formulation ratios and evaluation results for coating liquids of respective Examples.
Fig. 18 shows a table indicating formulation ratios and evaluation results for coating liquids of respective Examples.
Fig. 19 shows a table indicating formulation ratios and evaluation results for coating liquids of respective Examples.
Fig. 20 shows a table indicating formulation ratios and evaluation results for coating liquids of respective Comparative Examples.

### [Description of the Embodiments]

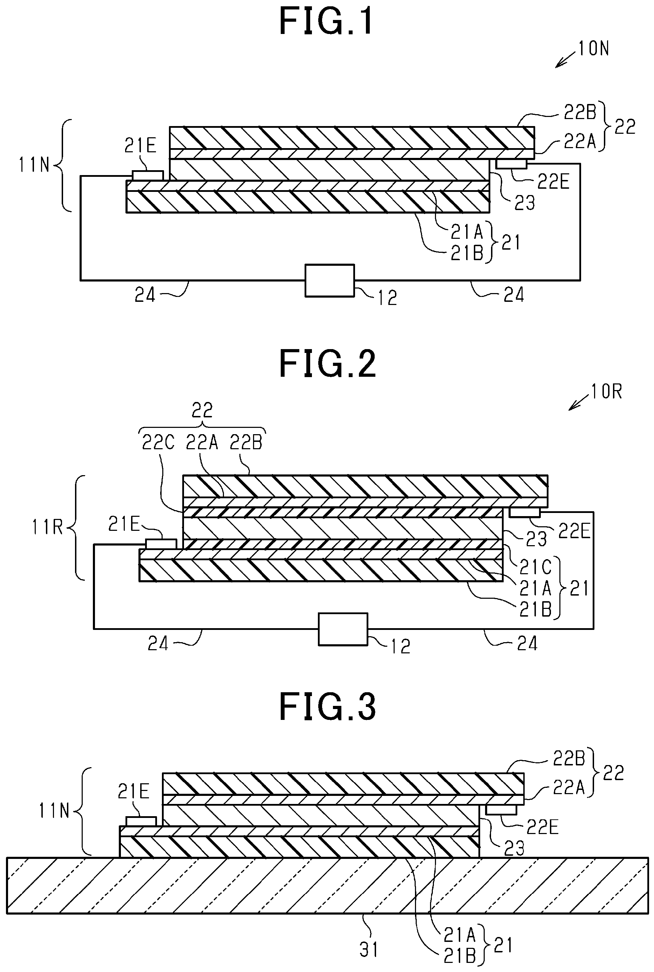

Referring to Figs. 1 to 20, an embodiment of a light control sheet will be described. The model type for the light control sheet according to the present disclosure may be a normal type or a reverse type. In the following, a normal-type light control device including a normal-type light control sheet and a drive unit will be described referring to Fig. 1, and a reverse-type light control device including a reverse-type light control sheet and a drive unit will be described referring to Fig. 2.

Light control sheets may be attached, for example, to transparent components of windows which are provided to moving objects, such as vehicles and aircraft. Alternatively, light control sheets may be attached, for example, to windows in various buildings, such as houses, stations, and airports, partitions used in offices, and transparent components in display windows, etc. used in stores. Light control sheets may have a flat or curved shape.

### [Normal-type light control device]

As shown in Fig. 1, a normal-type light control device 10N includes a normal-type light control sheet 11N and a drive unit 12. The light control sheet 11N includes a first transparent conductive sheet 21, a second transparent conductive sheet 22, and a light control layer 23. The light control sheet 11N is configured to switch between a transparent state in which the light control layer 23 appears to be transparent and an opaque state in which the light control layer 23 appears to be opaque by switching between a state in which a voltage is applied between the first and second transparent conductive sheets 21 and 22 and a state in which no voltage is applied therebetween.

The first transparent conductive sheet 21 includes a first transparent electrode layer 21A and a first transparent substrate 21B supporting the first transparent electrode layer 21A. The second transparent conductive sheet 22 includes a second transparent electrode layer 22A and a second transparent substrate 22B supporting the second transparent electrode layer 22A.

In the light control sheet 11N, the light control layer 23 is located between the first and second transparent conductive sheets 21 and 22. The first transparent electrode layer 21A is located between the first transparent substrate 21B and the light control layer 23. The second transparent electrode layer 22A is located between the second transparent substrate 22B and the light control layer 23.

The light control sheet 11N exhibits transparency or opacity that has a higher haze than transparency according to the magnitude of the voltage applied to the light control layer 23. The model type of the light control sheet 11N included in the normal-type light control device 10N is a normal type, and therefore, the light control sheet 11N appears to be opaque in the state in which no voltage is applied to the light control layer 23. In contrast, the light control sheet 11N appears to be transparent in the state in which a voltage is applied to the light control layer 23. For example, the light control sheet 11N in an opaque state may have a haze of 80% or more, while the light control sheet 11N in a transparent state may have a haze of 5% or less. The haze of the light control sheet 11N is measured according to a method based on JIS K 7136: 2000 "Plastics-Determination of haze for transparent materials".

The light control sheet 11N includes a first electrode 21E attached to part of the first transparent electrode layer 21A and a second electrode 22E attached to part of the second transparent electrode layer 22A. The light control sheet 11N further includes a wiring 24 connected to the first electrode 21E and a wiring 24 connected to the second electrode 22E. The first electrode 21E is connected to the drive unit 12 via the wiring 24. The second electrode 22E is connected to the drive unit 12 via the wiring 24.

The first transparent conductive sheet 21 and the second transparent conductive sheet 22 apply voltages to the light control layer 23 to switch the light control layer 23 between transparent and opaque. The transparent conductive sheets 21 and 22 allow visible light to be transmitted therethrough. Light transmittance of the first transparent conductive sheet 21 allows an object to be visible via the light control sheet 11N. Similarly to the light transmittance of the first transparent conductive sheet 21, light transmittance of the second transparent conductive sheet 22 allows an object to be visible via the light control sheet 11N.

The material for forming the transparent electrode layers 21A and 22A may be, for example, any one material selected from the group consisting of indium tin oxide, fluorine-doped tin oxide, tin oxide, zinc oxide, carbon nanotubes, poly(3,4-ethylenedioxythiophene), and silver.

The material for forming the transparent substrates 21B and 22B may be a synthetic resin or inorganic compound. Examples of the synthetic resin include polyesters, polyacrylates, polycarbonates, and polyolefins. Examples of the polyesters include polyethylene terephthalate and polyethylene naphthalate. Examples of the polyacrylates include polymethylmethacrylate. Examples of the inorganic compound include silicon dioxide, silicon oxynitride, and silicon nitride.

Examples of the electrodes 21E and 22E include flexible printed circuits (FPCs). An FPC includes a support layer, a conductor, and a protective layer. The conductor is sandwiched between the support layer and the protective layer. The support layer and the protective layer are each made of an insulating synthetic resin. The support layer and the protective layer may be each made of a polyimide, for example. The conductor may be made of a thin metal film, for example. The material for forming the thin metal film may be copper, for example. The electrodes 21E and 22E are not limited to FPCs but may be, for example, metal tapes.

The electrodes 21E and 22E are attached to the respective transparent electrode layers 21A and 22A via unshown conductive adhesive layers. In the portions of the electrodes 21E and 22E in which they are connected to the respective conductive adhesive layers, the conductors are exposed from the protective layers or the support layers.

The conductive adhesive layers may be made, for example, of anisotropic conductive films (ACFs), anisotropic conductive pastes (ACPs), isotropic conductive films (ICFs), and isotropic conductive pastes (ICPs). From the perspective of handleability in the process of producing the light control device 10N, the conductive adhesive layers are preferably anisotropic conductive sheets.

The wirings 24 are each formed, for example, of a metal wire and an insulating layer covering the metal wire. The wire may be made of copper, for example.

The drive unit 12 is configured to apply a voltage to the light control layer 23 provided to the light control sheet 11N. The drive unit 12 applies an AC voltage between the first and second transparent electrode layers 21A and 22A. The drive unit 12 preferably applies an AC voltage with a rectangular waveform between the two transparent electrode layers 21A and 22A. In other words, the drive unit 12 preferably outputs a rectangular wave voltage signal.

### [Reverse-type light control device]

A reverse-type light control device 10R shown in Fig. 2 is different from the normal-type light control device 10N described above in that it includes a reverse-type light control sheet 11R. Therefore, in the following, differences of the reverse-type light control device 10R from the normal-type light control device 10N will be described in detail. The components of the reverse-type light control device 10R common to those of the normal-type light control device 10N are given the same reference signs as those of the normal-type light control device 10N to omit detailed description of the components in question.

As shown in Fig. 2, the reverse-type light control device 10R includes a reverse-type light control sheet 11R and a drive unit 12. In addition to the layer structure provided to the normal-type light control sheet 11N, the light control sheet 11R includes a first alignment film 21C and a second alignment film 22C. Therefore, in the reverse-type light control device 10R, the first transparent conductive sheet 21 includes the first alignment film 21C in addition to the first transparent electrode layer 21A and the first transparent substrate 21B. The second transparent conductive sheet 22 includes the second alignment film 22C in addition to the second transparent electrode layer 22A and the second transparent substrate 22B.

The light control layer 23 is located between the first and second alignment films 21C and 22C. The first alignment film 21C is located between the light control layer 23 and the first transparent electrode layer 21A and is in contact with the light control layer 23. The second alignment film 22C is located between the light control layer 23 and the second transparent electrode layer 22A and is in contact with the light control layer 23.

The material for forming the first and second alignment films 21C and 22C may include organic compounds, inorganic compounds, and mixtures of these. Examples of the organic compounds may include polyimides, polyamides, polyvinyl alcohols, and cyanide compounds. Examples of the inorganic compounds may include silicon oxides and zirconium oxides. The material for forming the alignment films 21C and 22C may be a silicone. Silicones are compounds having inorganic and organic parts.

The first and second alignment films 21C and 22C may each be, for example, a vertical alignment film. The vertical alignment film aligns the long axes of the molecules of the at least one liquid crystal compound so as to be perpendicular to the surface thereof facing away from the surface contacting the first transparent electrode layer 21A, or to the surface thereof facing away from the surface contacting the second transparent electrode layer 22A. In this way, the alignment films 21C and 22C regulate the alignment of a liquid crystal compound contained in the light control layer 23.

### [Vehicle window]

Fig. 3 is a schematic diagram illustrating a vehicle window including a light control sheet. In the example shown in Fig. 3, the vehicle window includes the normal-type light control sheet 11N; however, the vehicle window may include the reverse-type light control sheet 11R.

As shown in Fig. 3, the light control sheet 11N is attached to a transparent component 31 provided to the vehicle window. In the example shown in Fig. 3, the shape of the light control sheet 11N is planar because the light control sheet 11N is attached to the flat surface of the transparent component 31. The transparent component 31 may have a curved surface. In this case, the light control sheet 11N attached to the curved surface may be curved. An adhesive layer may be provided between the light control sheet 11N and the transparent component 31 to bond the light control sheet 11N to the transparent component 31.

### [Light control layer]

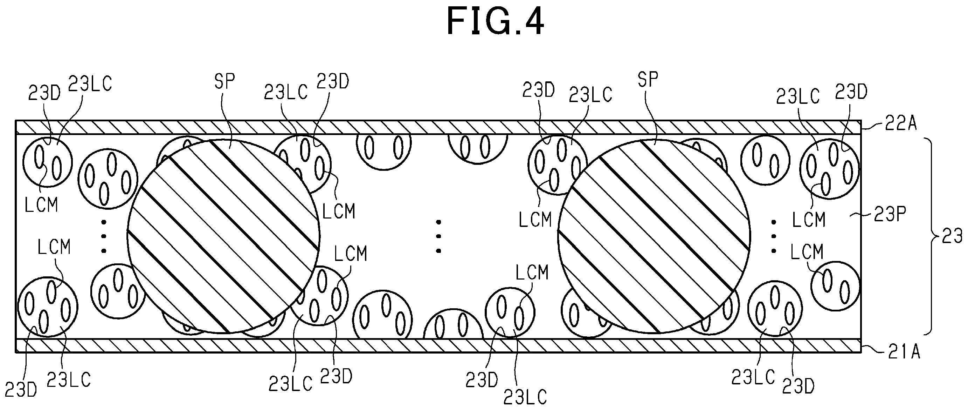

Fig. 4 shows a cross-sectional structure of the normal-type light control sheet 11N. It should be noted that the reverse-type light control sheet 11R has the same structure as the structure shown in Fig. 4 except that the reverse-type light control sheet 11R includes the first and second alignment films 21C and 22C.

As shown in Fig. 4, the light control layer 23 comprises a liquid crystal composition 23LC, spacers SP, and a transparent polymer layer 23P. The transparent polymer layer 23P defines multiple voids 23D. The liquid crystal composition 23LC is filled in the voids 23D.

### [Liquid crystal composition]

The liquid crystal composition 23LC contains a liquid crystal mixture LCM. The mass content of the liquid crystal mixture LCM relative to that of the light control layer 23 is 40 mass% or more and 65 mass% or less. In other words, a mass M23 of the light control layer 23 and a mass MLCM of the liquid crystal mixture LCM satisfy the following formula. The mass M23 of the light control layer 23 is equal to the sum of the mass MLCM of the liquid crystal mixture LCM, a mass M23P of the transparent polymer layer 23P, and a mass MSP of the spacers SP. The mass M23P of the transparent polymer layer 23P is equal to the sum of the mass of a photopolymerizable composition, the mass of a chain transfer agent, and the mass of a polymerization initiator. $40 \left(mass%\right) \leq \left(MLCM/M23\right) \times 100 \leq 65 \left(mass%\right)$

Since the upper content limit of the liquid crystal mixture LCM is 65 mass%, the adhesion strength between the light control layer 23 and the transparent conductive sheet 21 or 22 can be maintained at a high level by the transparent polymer layer 23P contained in the light control layer 23. Thus, peeling of the light control layer 23 from the transparent conductive sheet 21 or 22 can be suppressed. Since the lower content limit of the liquid crystal mixture LCM is 40 mass%, light is easily scattered in the light control sheet 11N or 11R to an extent that a high contrast is exhibited by the light control sheet 11N or 11R. The contrast of the light control sheet 11N or 11R corresponds to the ratio of the haze of the light control sheet 11N or 11R in an opaque state to the haze of the light control sheet 11N or 11R in a transparent state. Thus, with the content of the liquid crystal mixture LCM being in the range of 40 mass% or more and 65 mass% or less, the light control sheet 11N or 11R can satisfy both the high optical properties and high physical properties.

The liquid crystal composition 23LC may contain a dichroic dye, or may contain additives such as an antifoaming agent, antioxidant, weatherproofing agent, solvent, and viscosity reducer. The weatherproofing agent may be a UV absorber or light stabilizer.

The liquid crystal mixture LCM may have positive dielectric anisotropy. When the liquid crystal mixture LCM has positive dielectric anisotropy, a dielectric constant ε∥ of the liquid crystal mixture LCM in the long axis direction is higher than a dielectric constant ε⊥ thereof in the short axis direction. The liquid crystal mixture LCM may have negative dielectric anisotropy. When the liquid crystal mixture LCM has negative dielectric anisotropy, the dielectric constant ε∥ of the liquid crystal mixture LCM in the long axis direction is lower than the dielectric constant ε⊥ thereof in the short axis direction. The dielectric anisotropy of the liquid crystal mixture LCM is appropriately selected based on the model type of the light control sheet 11N or 11R. A normal-type light control sheet 11N may contain, for example, a liquid crystal mixture LCM with positive dielectric anisotropy. A reverse-type light control sheet 11R may contain, for example, a liquid crystal mixture LCM with negative dielectric anisotropy.

Examples of at least one liquid crystal compound contained in the liquid crystal mixture LCM include any one of the compounds selected from the group consisting of Schiff base compounds, azo compounds, azoxy compounds, biphenyl compounds, terphenyl compounds, benzoic acid ester compounds, tolan compounds, pyrimidine compounds, pyridazine compounds, cyclohexanecarboxylic acid ester compounds, phenylcyclohexane compounds, biphenylcyclohexane compounds, dicyanobenzene compounds, naphthalene compounds, and dioxane compounds. The liquid crystal mixture LCM may be a combination of two or more liquid crystal compounds. In the liquid crystal mixture LCM, the refractive index difference may be 0.05 or more. Specifically, the liquid crystal composition may contain a first liquid crystal compound and a second liquid crystal compound, and the difference in refractive index between the first and second liquid crystal compounds may be 0.05 or more. The difference in dielectric constant between the liquid crystal compounds contained int the liquid crystal mixture LCM may be 2 or more or may be 2 or less. The light control layer 23 may contain only a single liquid crystal compound instead of the liquid crystal mixture LCM.

An example of the structure of the liquid crystal compound is expressed by the following Formula 1.
[Chem. 2]

-R¹¹-A¹¹-Z¹¹-A¹²-Z¹²-A¹³-Z¹³-A¹⁴-R¹²-... Chemical Formula (8)

R¹¹ in Chemical Formula (8) represents a hydrogen atom or an alkyl group having 1 to 20 carbon atoms. One or two or more non-adjacent methylene bonds contained in the alkyl group of R¹¹ shown in Chemical Formula (8) are substitutable with any selected from the group consisting of an oxygen atom, ethylene bond, ester bond, and diether bond.

R¹² in Chemical Formula (8) is a hydrogen atom, fluorine atom, chlorine atom, cyano group, trifluoromethyl group, trifluoromethoxy group, difluoromethoxy group, or an alkyl group having 1 to 15 carbon atoms. One or two or more non-adjacent methylene bonds contained in the alkyl group of R¹² shown in Chemical Formula (8) are substitutable with any selected from the group consisting of an oxygen atom, ethylene bond, ester bond, and diether bond.

In Chemical Formula (8), A¹¹ , A¹² , A¹³ and A¹⁴ are independently a 1,4-phenylene group or 2,6-naphthylene group. One or two or more hydrogen atoms of the 1,4-phenylene group or 2,6-naphthylene group are substitutable with a fluorine atom, chlorine atom, trifluoromethyl group, or trifluoromethoxy group. In Chemical Formula (8), A¹¹ , A¹² , A¹³ and A¹⁴ may be independently a 1,4-cyclohexylene group, 3,6-cyclohexenylene group, 1,3-dioxane-2,5-diyl group, or pyridine-2,5-diyl group. In Chemical Formula (8), A¹³ and A¹⁴ may be independently a single bond. In Chemical Formula (8), A¹¹ , A¹² and A¹³ may be independently any one selected from the group consisting of a single bond, ester bond, diether bond, ethylene bond, fluoroethylene bond, and carbonyl bond.

### [Transparent polymer layer]

The transparent polymer layer 23P is a cured product of a photopolymerizable composition. The light for polymerizing the photopolymerizable composition may be UV light or electron beams. The photopolymerizable composition may be a UV-polymerizable composition or an electron beam-polymerizable composition. The lower content limit and the upper content limit of the transparent polymer layer 23P in the light control layer 23 are in the range in which the liquid crystal particles constituted of the liquid crystal mixture LCM are phase-separated from the polymer of the photopolymerizable composition during the polymerization process of the photopolymerizable composition. If the transparent polymer layer 23P is required to have increased physical strength, the lower content limit of the transparent polymer layer 23P is preferably higher. If the voltage for driving the liquid crystal mixture LCM is required to be reduced, the upper content limit of the transparent polymer layer 23P is preferably lower.

The transparent polymer layer 23P satisfies the following conditions.

(Condition 1) The mass content of sulfur atoms relative to that of the transparent polymer layer 23P is 0.03 mass% or more and 4 mass% or less. Specifically, the mass M23P of the transparent polymer layer 23P and a mass MS of the sulfur atoms satisfy the following formula.$0.03 \left(mass%\right) \leq \left(MS/M23P\right) \times 100 \leq 4 \left(mass%\right)$

(Condition 2) The transparent polymer layer contains a polymer compound expressed by the following Chemical Formula (1) in which X does not include a cyclic structure.

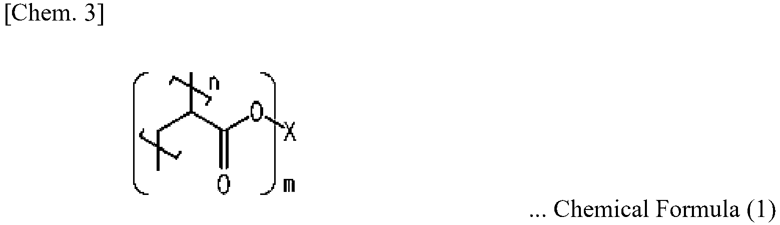

In Chemical Formula (1), n is an integer greater than or equal to 1, m is an integer between 1 and 4, and X is straight or branched and includes no functional group or includes at least one of or both of an ether group and an ester group as a functional group.

According to the light control sheet 11R or 11N of the present disclosure, the polymer compound does not include a cyclic structure, and therefore intermolecular forces are suppressed from acting between the liquid crystal mixture LCM and the polymer compound under a low-temperature environment. Accordingly, it becomes easier to drive the liquid crystal mixture LCM under a low-temperature environment. If the liquid crystal mixture LCM in the liquid crystal composition 23LC and the polymer compound in the transparent polymer layer 23P include cyclic structures, intermolecular forces will act between the cyclic structure in the liquid crystal mixture LCM and the cyclic structure in the polymer compound. Accordingly, driving of the liquid crystal mixture LCM is limited. Such drive limitations of liquid crystal mixture LCM are pronounced under a low-temperature environment, which is an environment where the temperature is 0°C or lower, for example, an environment where the temperature is between -10°C and -20°C. In this regard, in the light control sheet 11R or 11N of the present disclosure, the polymer compound does not include a cyclic structure as mentioned above, and therefore there are no intermolecular forces acting between the cyclic structures. Therefore, drive limitations of the liquid crystal mixture LCM are reduced, resulting in easier driving of the liquid crystal mixture LCM under a low-temperature environment.

The sulfur atoms contained in the light control layer 23 are derived from the chain transfer agent contained in the coating liquid for producing the light control layer 23. Due to the upper content limit of the sulfur atoms being 4 mass%, curing speed of the transparent polymer layer 23P is suppressed from becoming excessively low. For this reason, excessive increase in size of voids formed in the transparent polymer layer and excessive decrease in the number of the voids can be suppressed, thereby suppressing decrease in area of the interface between the transparent polymer layer and the voids. Accordingly, reduction in occurrence of light scattering is suppressed. Consequently, light scattering in an opaque state can be maintained, and therefore contrast can be enhanced. Furthermore, due to the lower content limit of the sulfur atoms being 0.03 mass%, the size of the voids 23D formed in the transparent polymer layer 23P is less likely to vary. Accordingly, the degree to which in-plane light scattering occurs is less likely to vary in the light control sheet 11N, resulting in enhancing contrast of the light control sheet 11N.

The transparent polymer layer 23P may contain at least one type of first repeat units and at least one type of second repeat units. In this case, the first repeat units should satisfy the following Condition 3 and the second repeat units should satisfy the following Condition 4. Specifically, the polymer compound contained in the transparent polymer layer 23P may be a copolymer comprising at least one type of first repeat units and at least one type of second repeat units. The polymer compound may be a homopolymer comprising one type of first repeat units or may be a homopolymer comprising one type of second repeat units.

(Condition 3) In each first repeat unit, X in Chemical Formula (1) has a straight or branched carbon chain, contains no functional group or contains at least one of or both of an ether group and an ester group as a functional group, and m is 1. In other words, each first repeat unit contains one acryloyl group.

(Condition 4) In each second repeat unit, X in Chemical Formula (1) is expressed by any of Chemical Formulas (2) to (7).
[Chem. 4]

-CₙₐH₂ₙₐ-... Chemical Formula (2)

In Chemical Formula (2), na is an integer between 2 and 9 and, when X in Chemical Formula (1) is expressed by Chemical Formula (2), m in Chemical Formula (1) is 2. In other words, when X is expressed by Chemical Formula (2), Chemical Formula (1) includes two acryloyl groups.

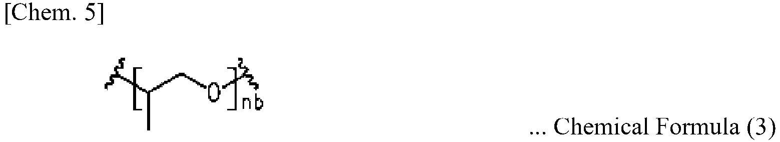

However, in Chemical Formula (3), nb is an integer between 2 and 12 and, when X in Chemical Formula (1) is expressed by Chemical Formula (3), m in Chemical Formula (1) is 2. In other words, when X is expressed by Chemical Formula (3), Chemical Formula (1) includes two acryloyl groups.

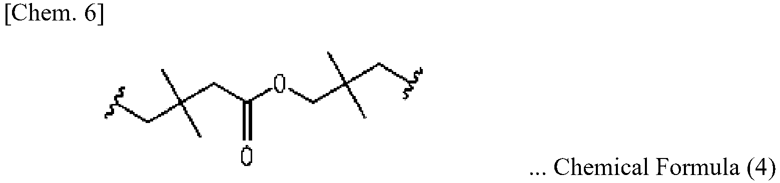

When X in Chemical Formula (1) is expressed by Chemical Formula (4), m in Chemical Formula (1) is 2. In other words, when X is expressed by Chemical Formula (4), Chemical Formula (1) includes two acryloyl groups.

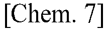

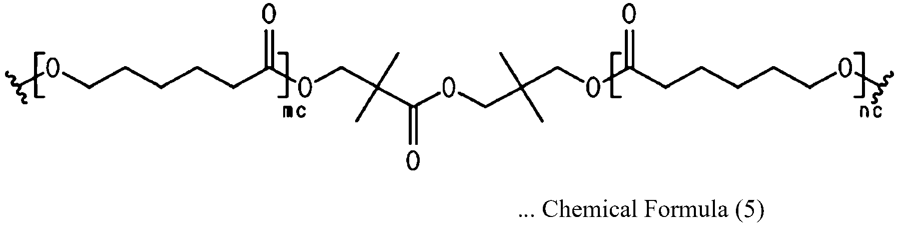

In Chemical Formula (5), mc and nc are each integers greater than or equal to 1 and, when the sum of mc and nc is 2 or 4 and X in Chemical Formula (1) is expressed by Chemical Formula (5), m in Chemical Formula (1) is 2. In other words, when X is expressed by Chemical Formula (5), Chemical Formula (1) includes two acryloyl groups.

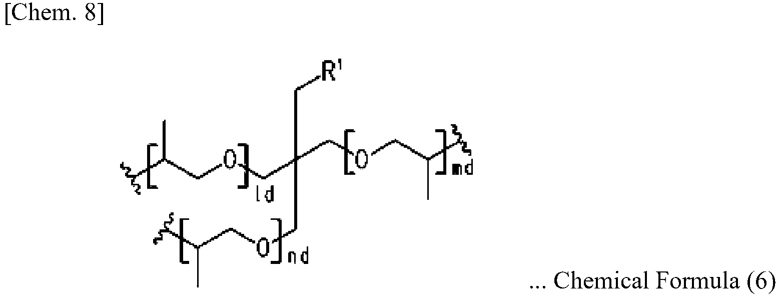

In Chemical Formula (6), R¹ is a hydrogen atom or an alkyl group with 1 to 5 carbons, and ld, md and nd are each an integer 0 or an integer greater than or equal to 1, and when X in Chemical Formula (1) is expressed by Chemical Formula (6), m in Chemical Formula (1) is 3. In other words, when X is expressed by Chemical Formula (6), Chemical Formula (1) includes three acryloyl groups.

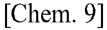

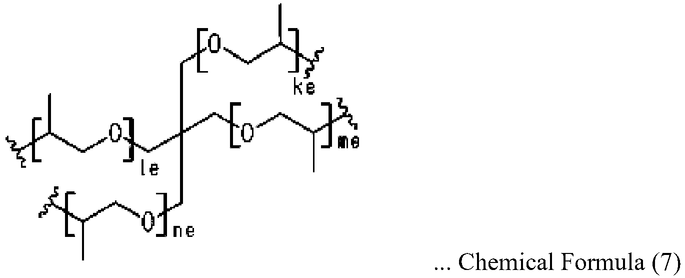

In Chemical Formula (7), ke, le, me and ne are each an integer 0 or an integer greater than or equal to 1 and, when X in Chemical Formula (1) is expressed by Chemical Formula (7), m in Chemical Formula (1) is 4. In other words, when X is expressed by Chemical Formula (7), Chemical Formula (1) includes four acryloyl groups.

The transparent polymer layer 23P contains the first repeat units and the second repeat units in which the number of acryloyl groups is different from that of the first repeat units. Accordingly, the number of acryloyl groups in the transparent polymer layer 23P can be adjusted by adjusting the content of the first repeat units and the content of the second repeat units.

If the transparent polymer layer 23P contains the first and second repeat units, the mass ratio of the first repeat units to the transparent polymer layer 23P may be greater than the mass ratio of the second repeat units to the transparent polymer layer 23P. Specifically, the mass M23P of the transparent polymer layer 23P, a mass M1 of the first repeat units, and a mass M2 of the second repeat units may satisfy the following formula. It should be noted that the mass M1 of the first repeat units is the total mass of the first repeat units contained in the transparent polymer layer 23P. The mass M2 of the second repeat units is the total mass of the second repeat units contained in the transparent polymer layer 23P. $\left(M1/M23P\right) > \left(M2/M23P\right)$

Thus, the transparent polymer layer 23P contains a larger number of first repeat units than the second repeat units and each first repeat unit has a smaller number of acryloyl groups than each second repeat unit, thereby suppressing excessive increase in the average number of acryloyl groups in the transparent polymer layer 23P. This suppresses excessive increase in curing speed of the transparent polymer layer 23P.

For example, the mass content of the first repeat units relative to that of the transparent polymer layer 23P may be 26 mass% or more and 46 mass% or less, and the mass content of the second repeat units relative to that of the transparent polymer layer 23P may be 1 mass% or more and 14 mass% or less. Specifically, the mass M23P of the transparent polymer layer 23P, the mass M1 of the first repeat units, and the mass M2 of the second repeat units may satisfy the following formula. It should be noted that the mass M1 of the first repeat units is the total mass of the first repeat units contained in the transparent polymer layer 23P. The mass M2 of the second repeat units is the total mass of the second repeat units contained in the transparent polymer layer 23P. $26 \left(mass%\right) \leq \left(M1/M23P\right) \times 100 \leq 46 \left(mass%\right)$ $1 \left(mass%\right) \leq \left(M2/M23P\right) \times 100 \leq 14 \left(mass%\right)$

Thus, in the transparent polymer layer 23P, the proportion of the second repeat units to the first repeat units can be suppressed to about 1/2 at most, thereby further suppressing excessive increase in the average number of acryloyl groups in the transparent polymer layer 23P.

The first repeat units may be derived from, for example, at least one material selected from the group consisting of methyl acrylate, ethyl acrylate, n-butyl acrylate, and t-butyl acrylate. The second repeat units may be derived from, for example, at least one material selected from the group consisting of 1,6-hexanediol diacrylate, 1,9-nonanediol diacrylate, dipropylene glycol diacrylate, polypropylene glycol diacrylate, neopentyl glycol hydroxypivalic acid ester diacrylate, 6-(propenoyloxy)hexanoic acid 3-[2,2-dimethyl-3-[[1-oxo-6-(propenoyloxy)hexyl]oxy]propoxy]-2,2-dimethyl-3-oxopropyl, trimethylolpropane triacrylate, propoxylated trimethylolpropane triacrylate, pentaerythritol tetraacrylate, and propoxylated pentaerythritol tetraacrylate.

When the number of acryloyl groups per molecule of a polymer compound k in the transparent polymer layer 23P is fk, and the mole fraction of the polymer compound k relative to the total molar quantity of the polymer compound is nk, an average number of acryloyl groups fave expressed by the following Formula (1) may be 1.5 or less.
[Math. 1] ${f}_{are} = {\sum }_{k = 1}^{n} {f}_{k} {n}_{k}$

When the average number of acryloyl groups is 1.5 or less, excessive increase in curing speed of the transparent polymer layer 23P can be suppressed. Thus, in the liquid crystal composition 23LC contained in the voids 23D of the transparent polymer layer 23P, decrease in purity of the liquid crystal mixture LCM is suppressed. Consequently, driving of the liquid crystal mixture LCM is less likely to be prevented by the impurities in the liquid crystal composition 23LC.

From the perspective of enhancing responsiveness of the light control sheet 11N, the lower limit ratio of the sulfur content to the average number of acryloyl groups is preferably 1.0 or more, more preferably 1.4 or more, and even more preferably 1.5 or more. From the perspective of enhancing contrast of the light control sheet 11N, the upper limit ratio of the sulfur content to the average number of acryloyl groups is preferably 4.0 or less, more preferably 3.5 or less, and even more preferably 2.0 or less.

### [Spacers]

The spacers SP are dispersed throughout the transparent polymer layer 23P. The thickness of the spacers SP determines the thickness of the light control layer 23. The thickness of the spacers SP may be the particle size of the spacers SP. The thickness of the light control layer 23 may be, for example, 5 µm or more and 100 µm or less. The spacers SP ensure uniform thickness of the light control layer 23. The spacers SP may be bead spacers, or may be photo spacers formed by exposure and development of a photo resist. The spacers SP may be colorless and transparent, or may be colored and transparent. If the liquid crystal composition 23LC contains a dichroic dye DP, the color of the spacers SP is preferably the same as the color exhibited by the dichroic dye DP.

### [Dichroic dye]

The dichroic dye is driven with a host-guest system using the liquid crystal mixture LCM as a host, and thereby develops a color. The dichroic dye may be, for example, at least one selected from the group consisting of polyiodines, azo compounds, anthraquinone compounds, naphthoquinone compounds, azomethine compounds, tetrazine compounds, quinophthalone compounds, merocyanine compounds, perylene compounds, and dioxazine compounds. The dichroic dye may be a single compound or a combination of two or more compounds. If light resistance and dichroic ratio are required to be increased, the dichroic dye is preferably at least one selected from the group consisting of azo compounds and anthraquinone compounds, and more preferably an azo compound.

### [Method of producing light control sheet]

The method of producing the light control sheet 11N includes forming a coating film, which contains the photopolymerizable composition described above and the liquid crystal mixture LCM, between the first transparent conductive sheet 21 and the second transparent conductive sheet 22. When producing the normal-type light control sheet 11N, the coating film is formed between the first transparent electrode layer 21A of the first transparent conductive sheet 21 and the second transparent electrode layer 22A of the second transparent conductive sheet 22. When producing the reverse-type light control sheet 11R, the coating film is formed between the first alignment film 21C of the first transparent conductive sheet 21 and the second alignment film 22C of the second transparent conductive sheet 22.

The coating film contains a polymerization initiator that initiates polymerization of the photopolymerizable compound. The polymerization initiator may be, for example, at least one selected from the group consisting of diketone compounds, acetophenone compounds, benzoin compounds, benzophenone compounds, thioxanthone compounds, and oxime ester compounds. The polymerization initiator may be a single compound, or may be a combination of two or more compounds. An example polymerization initiator may be any one material selected from the group consisting of benzoin methyl ether, benzoin ethyl ether, benzoin isopropyl ether, cyclohexyl phenyl ketone, and phenylacetophenone.

The method of producing the light control sheet 11N or 11R includes polymerizing the photopolymerizable compound in the coating film to phase-separate liquid crystal particles composed of the liquid crystal mixture LCM from the polymer. The light applied to the coating film may be emitted toward the first transparent conductive sheet 21 or the second transparent conductive sheet 22, or may be emitted toward both the first and second transparent conductive sheets 21 and 22.

Phase-separation of the liquid crystal particles composed of the liquid crystal mixture LCM progresses through polymerization of the photopolymerizable compound and diffusion of the liquid crystal mixture LCM. The rate of polymerization of the photopolymerizable compound depends on the intensity of light applied to the photopolymerizable compound. The rate of diffusion of the liquid crystal mixture LCM depends on the processing temperature during polymerization of the photopolymerizable compound. For phase-separation of the liquid crystal mixture LCM, the intensity of light applied to the photopolymerizable compound is determined so that the liquid crystal particles will have a desired size, i.e., so that the voids 23D will have a desired size. For phase-separation of the liquid crystal mixture LCM, heating may be performed to accelerate diffusion of the liquid crystal mixture LCM.

If the voids 23D are required to have a smaller size, it is preferable to increase the intensity of light applied to the photopolymerizable compound and proceed with polymerization at a low temperature for suppressing diffusion of the liquid crystal mixture LCM. If the voids 23D are required to have a larger size, it is preferable to decrease the intensity of light applied to the photopolymerizable compound and proceed with polymerization at a high temperature for promoting diffusion of the liquid crystal mixture LCM.

### [Examples]

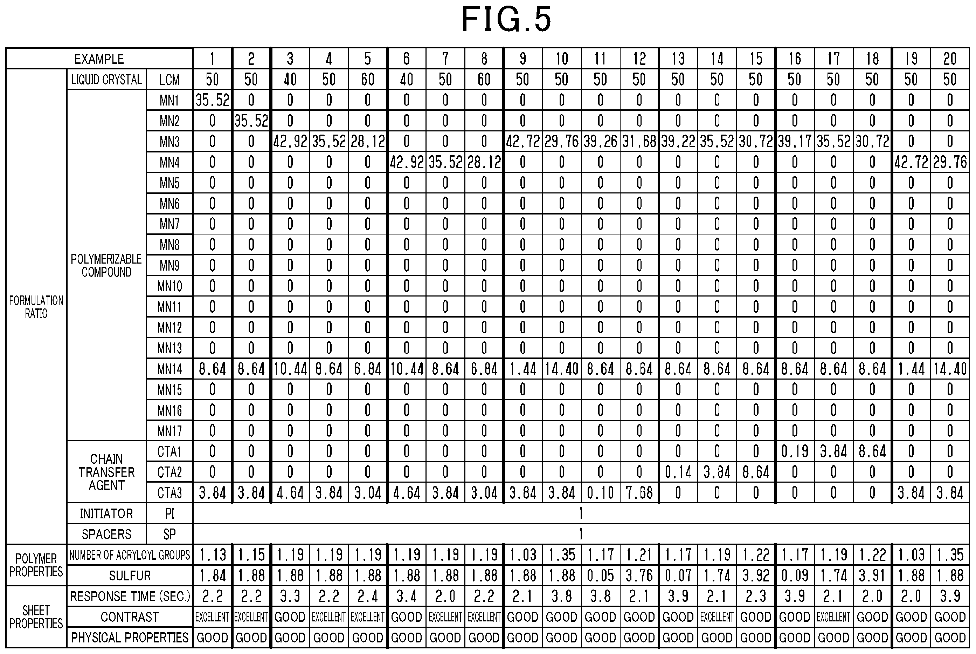

Referring to Figs. 5 to 20, Examples and Comparative Examples of the light control sheet 11N will be described. The light control sheets 11N of the respective Examples and Comparative Examples are normal-type light control sheets 11N. A coating film containing a photopolymerizable composition and the liquid crystal mixture LCM was formed between the first transparent conductive sheet 21 and the second transparent conductive sheet 22, followed by polymerizing the photopolymerizable composition in the coating film, thereby obtaining a light control sheet 11N.

The following materials were used for forming light control sheets 11N of the respective Examples and Comparative Examples. Formulation ratios were determined as shown in Figs. 5 to 20, for the coating liquids for forming the coating films in the light control sheets 11N of the Examples and Comparative Examples. The formulation ratios shown in Figs. 5 to 20 each indicate the proportion of each material to the total mass of the coating liquid. Specifically, the formulation ratios each indicate the proportion of each material to the sum total of the mass of the liquid crystal mixture LCM, the mass of the photopolymerization composition, the mass of the spacers SP, the mass of the chain transfer agent, and the mass of the polymerization initiator.

### [Materials]

First transparent electrode layer 21A: Indium tin oxide
Second transparent electrode layer 22A: Indium tin oxide
First transparent substrate 21B: Polyethylene terephthalate film
Second transparent substrate 22B: Polyethylene terephthalate film
Liquid crystal mixture LCM: Cyanobiphenyl liquid crystal (MLC-6609, manufactured by Merck)
Polymerization initiator PI: 1-hydroxycyclohexyl phenyl ketone (Omnirad 184, manufactured by IGM) (Omnirad is a registered trademark) 1 mass%
Spacers SP: 20 µm-diameter true spherical shape (biphenyl copolymer) (Micropearl SP-220, manufactured by Sekisui Chemical Co., Ltd.) (Micropearl is a registered trademark)
   1% by mass
UV-polymerizable compound (m=1)
Component MN 1: Methyl acrylate (Chemical Formula (9))
Component MN2: Ethyl acrylate (Chemical Formula (10))
Component MN3: n-butyl acrylate (Chemical Formula (11))
Component MN4: t-butyl acrylate (Chemical Formula (12))
Component MN5: Isobornyl acrylate (Chemical Formula (13)) 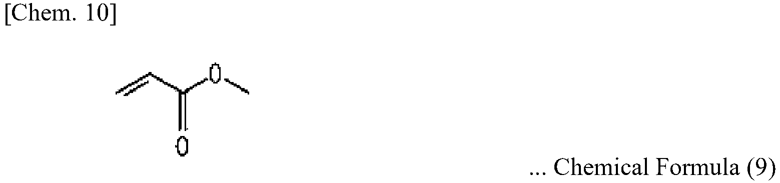 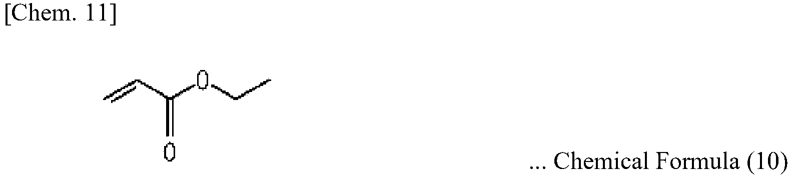 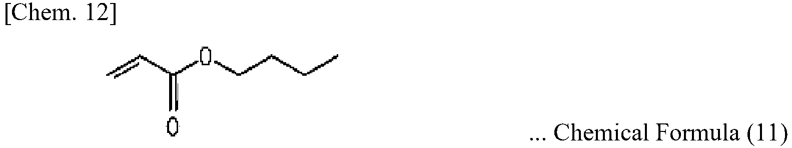 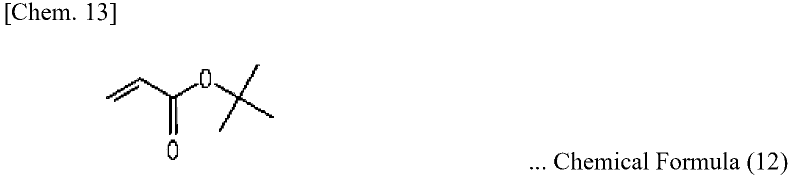 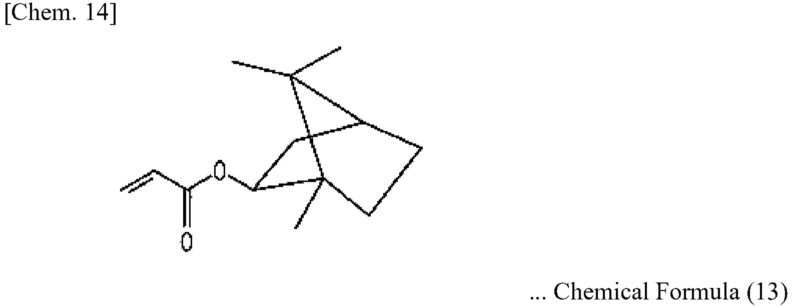
UV-polymerizable compound (m=2)
Component MN6: 1,6-hexanediol diacrylate (Chemical Formula (14))
Component MN7: 1,9-nonanediol diacrylate (Chemical Formula (15))
Component MN8: Dipropylene glycol diacrylate (APG-100, manufactured by Shin-Nakamura Chemical Co., Ltd.) (Chemical Formula (16))
Component MN9: Polypropylene glycol diacrylate (APG-400, manufactured by Shin-Nakamura Chemical Co., Ltd.) (Chemical Formula (17))
Component MN10: Polypropylene glycol diacrylate (APG-700, manufactured by Shin-Nakamura Chemical Co., Ltd.) (Chemical Formula (18))
Component MN11: Neopentyl glycol hydroxypivalate ester diacrylate (FM-400, manufactured by Nippon Kayaku Co., Ltd.) (Chemical Formula (19))
Component MN12: 6-(propenoyloxy)hexanoic acid 3-[2,2-dimethyl-3-[[1-oxo-6-(propenoyloxy)hexyl]oxy]propoxy]-2,2-dimethyl-3-oxopropyl (HX-220, manufactured by Nippon Kayaku Co., Ltd.) (Chemical Formula (20))
Component MN13: Tricyclodecane dimethanol diacrylate (A-DCP, manufactured by Shin-Nakamura Chemical Co., Ltd.) (Chemical Formula (21)) 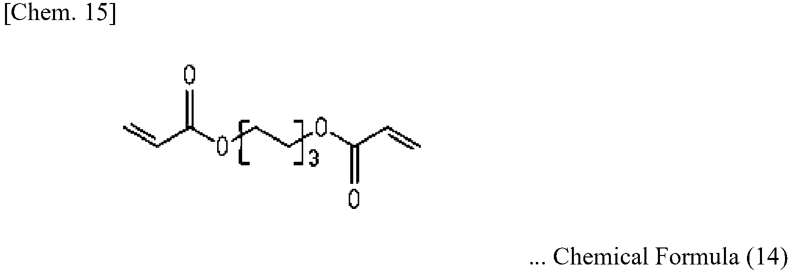 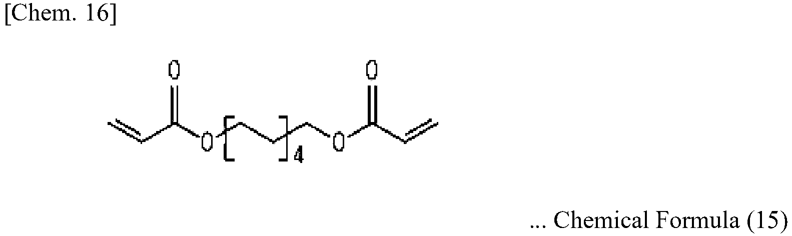 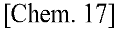 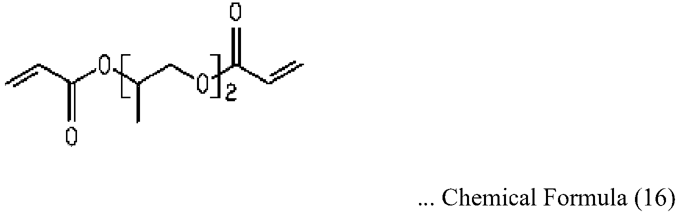 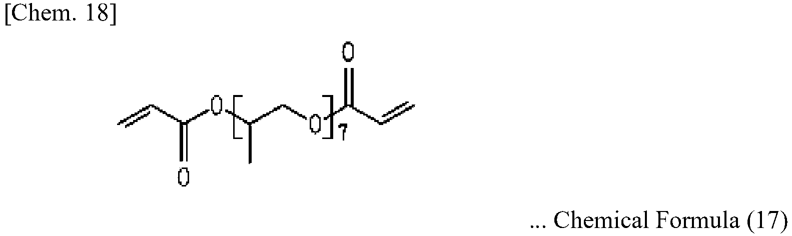 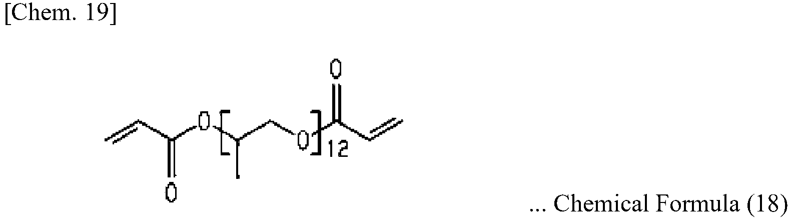 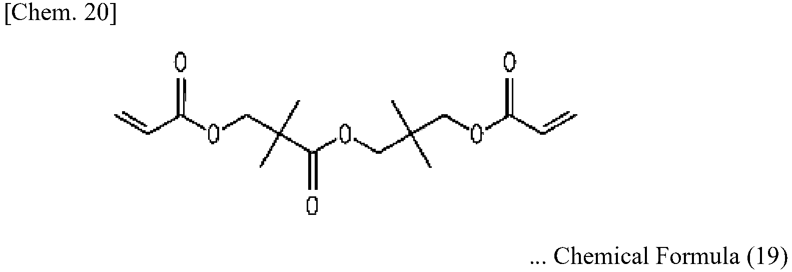 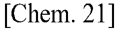 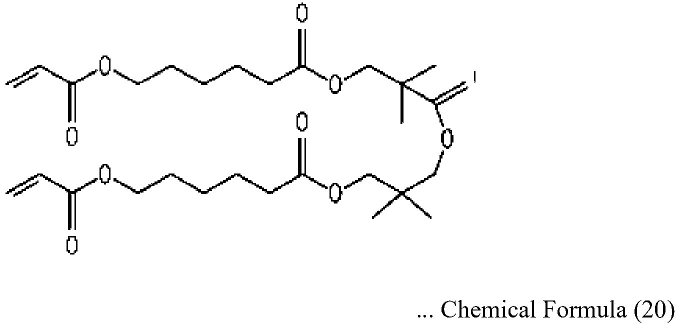 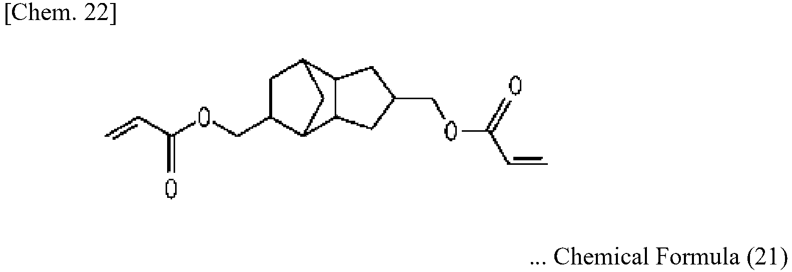
UV-polymerizable compound (m=3)
Component MN14: Trimethylolpropane triacrylate (A-TMPT, manufactured by Shin-Nakamura Chemical Co., Ltd.) (Chemical Formula (22))
Component MN15: Propoxylated trimethylolpropane triacrylate (A-TMPT-3PO, manufactured by Shin-Nakamura Chemical Co., Ltd.) (Chemical Formula (23)) 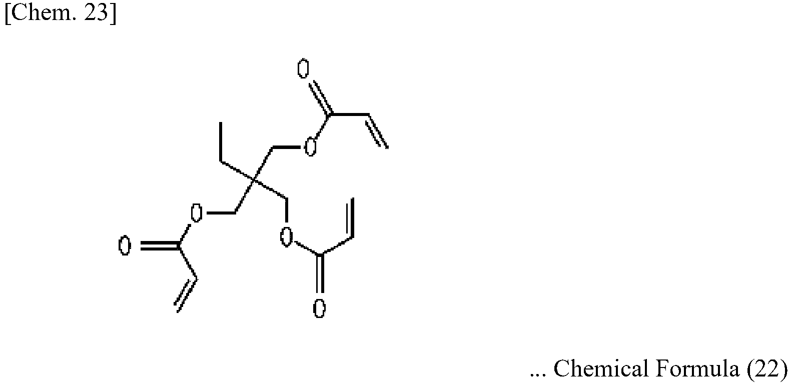 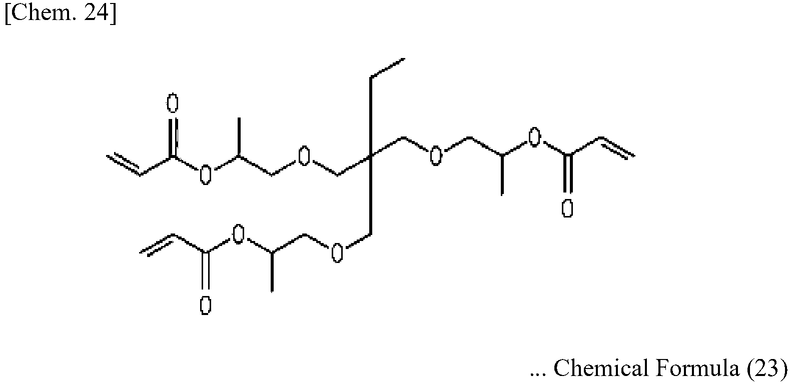
UV-polymerizable compound (m=4)
Component MN16: Pentaerythritol tetraacrylate (A-TMMT, manufactured by Shin-Nakamura Chemical Co., Ltd.) (Chemical Formula (24))
Component MN17: Propoxylated pentaerythritol tetraacrylate (ATM-4P, manufactured by Shin-Nakamura Chemical Co., Ltd.) (Chemical Formula (25)) 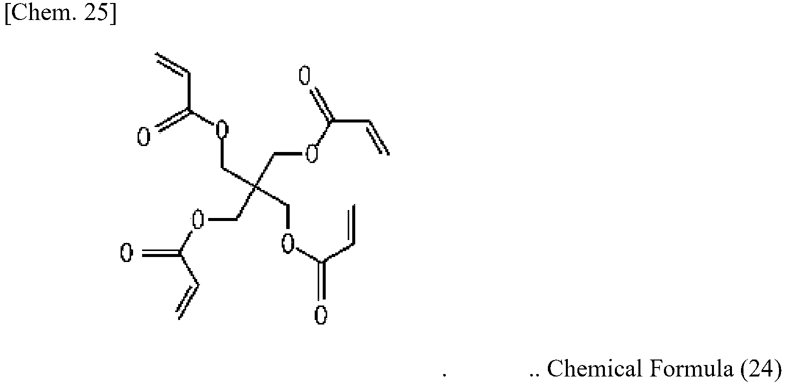 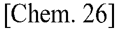 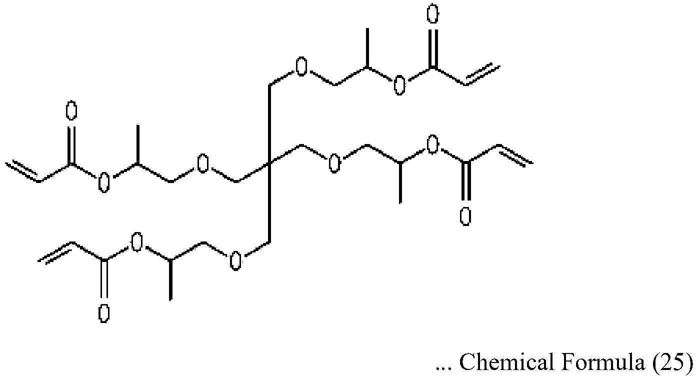
Chain transfer agent
Component CTA1: 1,4-bis(3-mercaptobutyryloxy)butane (KarenzMT BD1, manufactured by Resonac Corporation) (Karenz is a registered trademark) (Chemical Formula (26))
Component CTA2: Trimethylolpropane tris(3-mercaptobutyrate) (KarenzMT TPBM, manufactured by Resonac Corporation) (Karenz is a registered trademark) (Chemical Formula (27))
Component CTA3: Pentaerythritol tetrakis(3-mercaptobutyrate) (KarenzMT PE1, manufactured by Resonac Corporation) (Karenz is a registered trademark) (Chemical Formula (28))

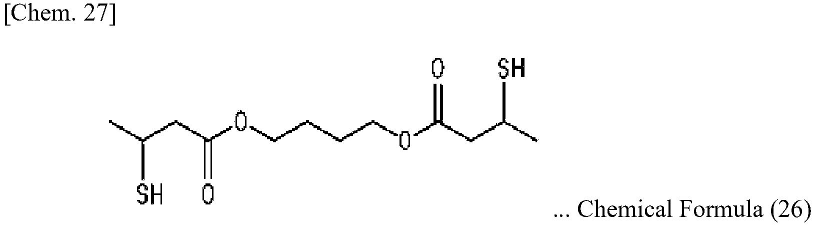

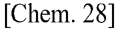

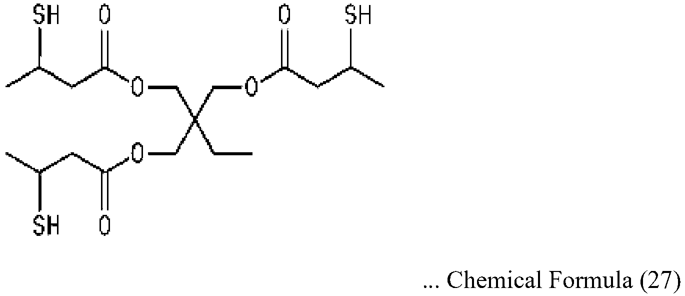

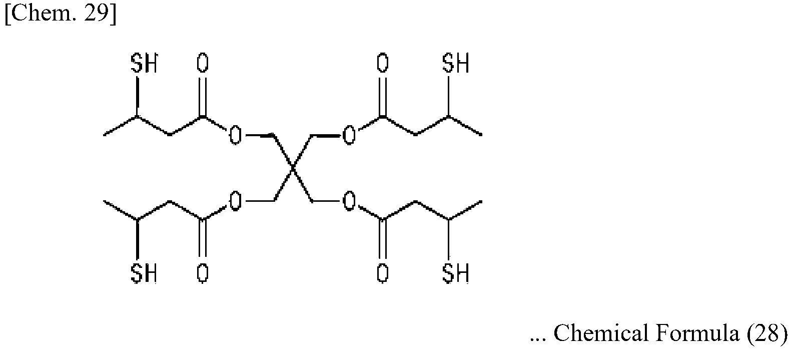

### [Example 1]

As shown in Fig. 5, 50 mass% liquid crystal mixture LCM, 35.52 mass% Component MN1, 8.64 mass% Component MN14, and 3.84 mass% Component CTA3 were used. By applying the coating liquid of Example 1, a coating film with a thickness of 20 µm was formed on the first transparent electrode layer 21A, and the spacers SP were dispersed in the coating film. Then, in a state in which the coating film dispersed with the spacers SP was sandwiched between the first and second transparent electrode layers 21A and 22A, the first transparent substrate 21B was irradiated with UV light with a wavelength of 365 nm from both the top and the bottom. Thus, the light control sheet 11N of Example 1 was obtained. In this case, the intensity of the UV light was set to 10 mW/cm² on one side, and the same intensity was set on the top and the bottom, and duration of the UV light exposure was set to 100 seconds.

### [Example 2]

As shown in Fig. 5, the light control sheet 11N of Example 2 was obtained as in Example 1 except that 35.52 mass% Component MN2 was used instead of 35.52 mass% Component MN1.

### [Examples 3 to 5]

As shown in Fig. 5, 40 mass% or more and 60 mass% or less liquid crystal mixture LCM, 28.12 mass% or more and 42.92 mass% or less Component MN3, 6.84 mass% or more and 10.44 mass% or less Component MN14, and 3.04 mass% or more and 4.64 mass% or less Component CTA3 were used. Except for these points, the light control sheets 11N of Examples 3 to 5 were obtained as in Example 1.

### [Examples 6 to 8]

As shown in Fig. 5, the light control sheets 11N of Examples 6 to 8 were obtained as in Examples 3 to 5 except that 28.12 mass% or more and 42.92 mass% or less Component MN4 was used.

### [Examples 9 to 12]

As shown in Fig. 5, 50 mass% liquid crystal mixture LCM, 29.76 mass% or more and 42.72 mass% or less Component MN3, 1.44 mass% or more and 14.40 mass% or less Component MN14, and 0.10 mass% or more and 7.68 mass% or less Component CTA3 were used. Except for these points, the light control sheets 11N of Examples 9 to 12 were obtained as in Examples 3 to 5.

### [Examples 13 to 15]

As shown in Fig. 5, the light control sheets 11N of Examples 13 to 15 were obtained as in Examples 9 to 12 except that 30.72 mass% or more and 39.22 mass% or less Component MN3, 8.64 mass% Component MN14, and 0.14 mass% or more and 8.64 mass% or less Component CTA2 were used.

### [Examples 16 to 18]

As shown in Fig. 5, the light control sheets 11N of Examples 16 to 18 were obtained as in Examples 13 to 15 except that 30.72 mass% or more and 39.17 mass% or less Component MN3, and 0.19 mass% or more and 8.64 mass% or less Component CTA1 were used.

### [Examples 19 to 22]

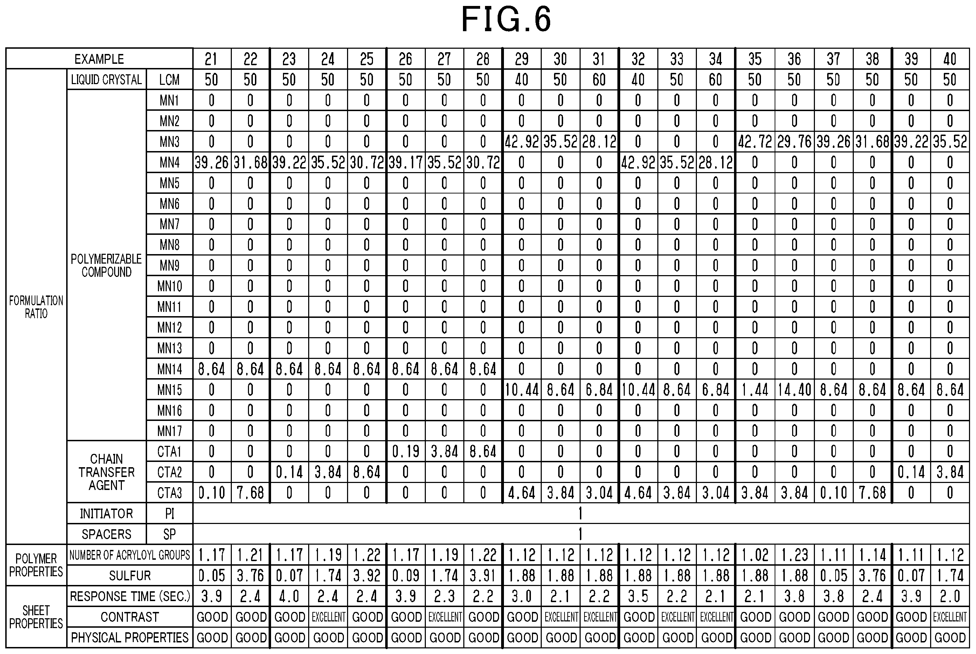

As shown in Figs. 5 and 6, the light control sheets 11N of Examples 19 to 22 were obtained as in Examples 9 to 12 except that Component MN4 was used instead of Component MN3.

### [Examples 23 to 25]

As shown in Fig. 6, the light control sheets 11N of Examples 23 to 25 were obtained as in Examples 13 to 15 except that Component MN4 was used instead of Component MN3.

### [Examples 26 to 28]

As shown in Fig. 6, the light control sheets 11N of Examples 26 to 28 were obtained as in Examples 16 to 18 except that Component MN4 was used instead of Component MN3.

### [Examples 29 to 31]

As shown in Fig. 6, the light control sheets 11N of Examples 29 to 31 were obtained as in Examples 3 to 5 except that Component MN15 was used instead of Component MN14.

### [Examples 32 to 34]

As shown in Fig. 6, the light control sheets 11N of Examples 32 to 34 were obtained as in Examples 6 to 8 except that Component MN15 was used instead of Component MN14.

### [Examples 35 to 38]

As shown in Fig. 6, the light control sheets 11N of Examples 35 to 38 were obtained as in Examples 9 to 12 except that Component MN15 was used instead of Component MN14.

### [Examples 39 to 41]

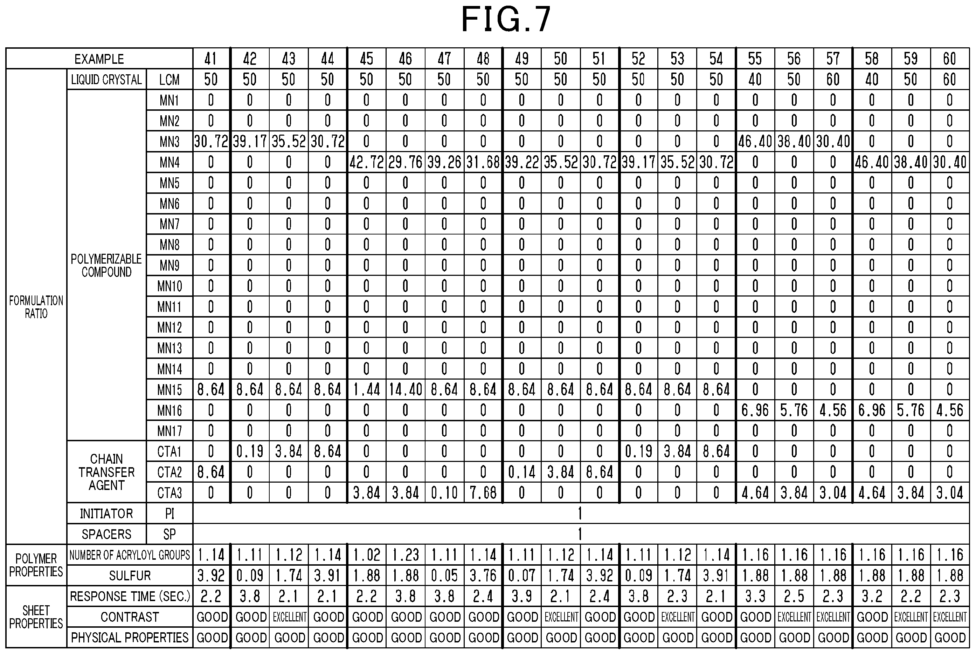

As shown in Figs. 6 and 7, the light control sheets 11N of Examples 39 to 41 were obtained as in Examples 13 to 15 except that Component MN15 was used instead of Component MN14.

### [Examples 42 to 44]

As shown in Fig. 7, the light control sheets 11N of Examples 42 to 44 were obtained as in Examples 16 to 18 except that Component MN15 was used instead of Component MN14.

### [Examples 45 to 48]

As shown in Fig. 7, the light control sheets 11N of Examples 45 to 48 were obtained as in Examples 35 to 38 except that Component MN4 was used instead of Component MN3.

### [Examples 49 to 51]

As shown in Fig. 7, the light control sheets 11N of Examples 49 to 51 were obtained as in Examples 39 to 41 except that Component MN4 was used instead of Component MN3.

### [Examples 52 to 54]

As shown in Fig. 7, the light control sheets 11N of Examples 52 to 54 were obtained as in Examples 42 to 44 except that Component MN4 was used instead of Component MN3.

### [Examples 55 to 57]

As shown in Fig. 7, the light control sheets 11N of Examples 55 to 57 were obtained as in Examples 3 to 5 except that 30.40 mass% or more and 46.40 mass% or less Component MN3, and 4.56 mass% or more and 6.96 mass% or less Component MN16 were used.

### [Examples 58 to 60]

As shown in Fig. 7, the light control sheets 11N of Examples 58 to 60 were obtained as in Examples 55 to 57 except that Component MN4 was used instead of Component MN3.

### [Examples 61 to 64]

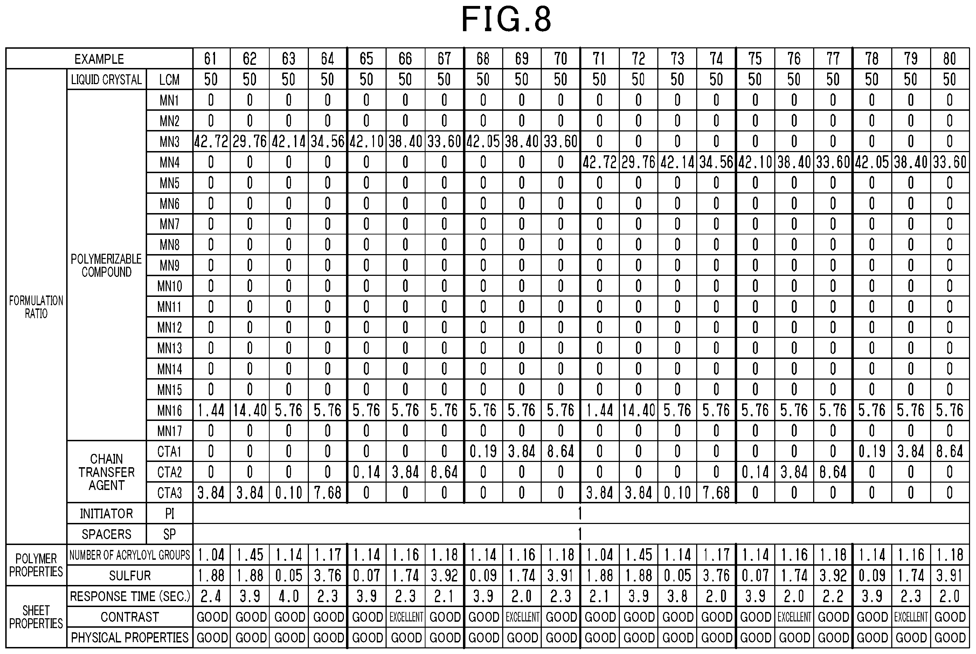

As shown in Fig. 8, the light control sheets 11N of Examples 61 to 64 were obtained as in Examples 9 to 12 except that 29.76 mass% or more and 42.72 mass% or less Component MN3, and 1.44 mass% or more and 14.40 mass% or less Component MN16 were used.

### [Examples 65 to 67]

As shown in Fig. 8, the light control sheets 11N of Examples 65 to 67 were obtained as in Examples 13 to 15 except that 33.60 mass% or more and 42.10 mass% or less Component MN3, and 5.76 mass% Component MN16 were used.

### [Examples 68 to 70]

As shown in Fig. 8, the light control sheets 11N of Examples 68 to 70 were obtained as in Examples 65 to 67 except that 33.60 mass% or more and 42.05 mass% or less Component MN3, and 0.19 mass% or more and 8.64 mass% or less Component CTA1 were used.

### [Examples 71 to 74]

As shown in Fig. 8, the light control sheets 11N of Examples 71 to 74 were obtained as in Examples 61 to 64 except that 29.76 mass% or more and 42.72 mass% or less Component MN4 was used instead of Component MN3.

### [Examples 75 to 77]

As shown in Fig. 8, the light control sheets 11N of Examples 75 to 77 were obtained as in Examples 13 to 15 except that 33.60 mass% or more and 42.10 mass% or less Component MN4 was used instead of Component MN3 and 5.76 mass% Component MN16 was used instead of Component MN14.

### [Examples 78 to 80]

As shown in Fig. 8, the light control sheets 11N of Examples 78 to 80 were obtained as in Examples 75 to 77 except that 33.60 mass% or more and 42.05 mass% or less Component MN4 was used and 0.19 mass% or more and 8.64 mass% or less Component CTA1 was used instead of Component CTA2.

### [Examples 81 to 83]

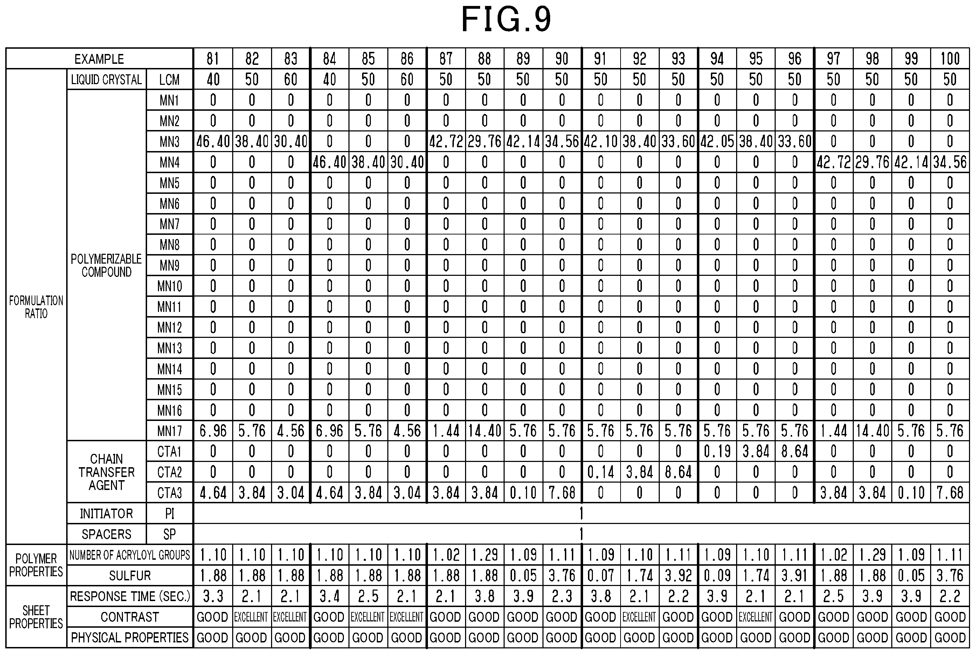

As shown in Fig. 9, the light control sheets 11N of Examples 81 to 83 were obtained as in Examples 3 to 5 except that 30.40 mass% or more and 46.40 mass% or less Component MN3 was used and 4.56 mass% or more and 6.96 mass% or less Component MN17 was used instead of Component MN14.

### [Examples 84 to 86]

As shown in Fig. 9, the light control sheets 11N of Examples 84 to 86 were obtained as in Examples 81 to 83 except that 30.40 mass% or more and 46.40 mass% or less Component MN4 was used instead of Component MN3.

### [Examples 87 to 90]

As shown in Fig. 9, the light control sheets 11N of Examples 87 to 90 were obtained as in Examples 9 to 12 except that 29.76 mass% or more and 42.72 mass% or less Component MN3 was used and 1.44 mass% or more and 14.40 mass% or less Component MN17 was used instead of Component MN14.

### [Examples 91 to 93]

As shown in Fig. 9, the light control sheets 11N of Examples 91 to 93 were obtained as in Examples 13 to 15 except that 33.60 mass% or more and 42.10 mass% or less Component MN3 was used and 5.76 mass% Component MN17 was used instead of Component MN14.

### [Examples 94 to 96]

As shown in Fig. 9, the light control sheets 11N of Examples 94 to 96 were obtained as in Examples 91 to 93 except that 33.60 mass% or more and 42.05 mass% or less Component MN3 was used and 0.19 mass% or more and 8.64 mass% or less Component CTA1 was used instead of Component CTA2.

### [Examples 97 to 100]

As shown in Fig. 9, the light control sheets 11N of Examples 97 to 100 were obtained as in Examples 9 to 12 except that 29.76 mass% or more and 42.72 mass% or less Component MN4 was used instead of Component MN3 and 1.44 mass% or more and 14.40 mass% or less Component MN17 was used instead of Component MN14.

### [Examples 101 to 103]

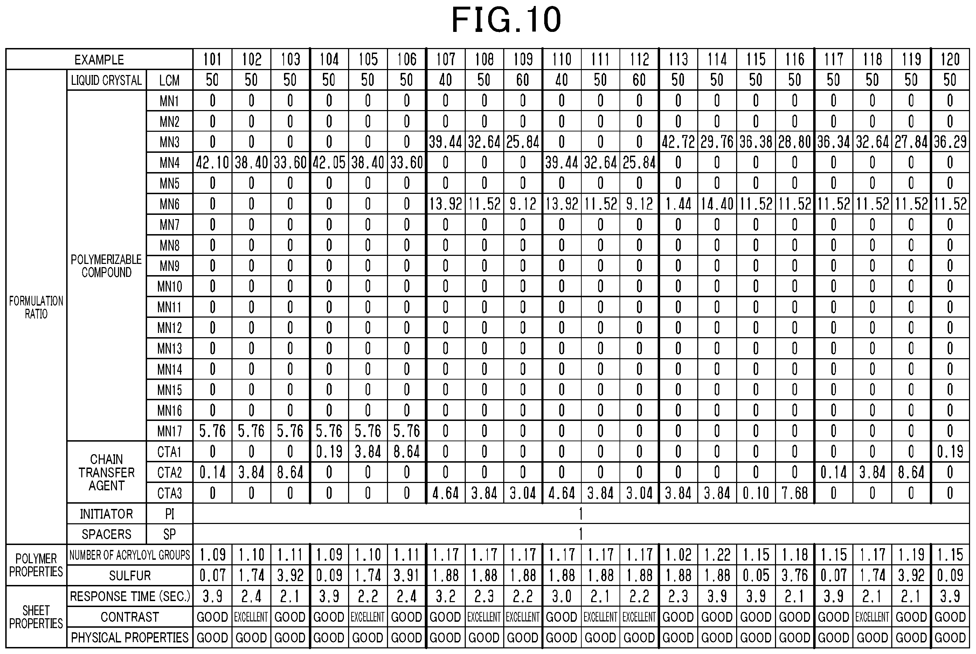

As shown in Fig. 10, the light control sheets 11N of Examples 101 to 103 were obtained as in Examples 13 to 15 except that 33.60 mass% or more and 42.10 mass% or less Component MN4 was used instead of Component MN3 and 5.76 mass% Component MN17 was used instead of Component MN14.

### [Examples 104 to 106]

As shown in Fig. 10, the light control sheets 11N of Examples 104 to 106 were obtained as in Examples 101 to 103 except that 33.60 mass% or more and 42.05 mass% or less Component MN4 and 0.19 mass% or more and 8.64 mass% or less Component CTA1 were used.

### [Examples 107 to 109]

As shown in Fig. 10, the light control sheets 11N of Examples 107 to 109 were obtained as in Examples 3 to 5 except that 25.84 mass% or more and 39.44 mass% or less Component MN3 was used and 9.12 mass% or more and 13.92 mass% or less Component MN6 was used instead of Component MN14.

### [Examples 110 to 112]

As shown in Fig. 10, the light control sheets 11N of Examples 110 to 112 were obtained as in Examples 107 to 109 except that 25.84 mass% or more and 39.44 mass% or less Component MN4 was used instead of Component MN3.

### [Examples 113 to 116]

As shown in Fig. 10, the light control sheets 11N of Examples 113 to 116 were obtained as in Examples 9 to 12 except that 28.80 mass% or more and 42.72 mass% or less Component MN3 was used and 1.44 mass% or more and 14.40 mass% or less Component MN6 was used instead of Component MN14.

### [Examples 117 to 119]

As shown in Fig. 10, the light control sheets 11N of Examples 117 to 119 were obtained as in Examples 13 to 15 except that 27.84 mass% or more and 36.34 mass% or less Component MN3 was used and 11.52 mass% Component MN6 was used instead of Component MN14.

### [Examples 120 to 122]

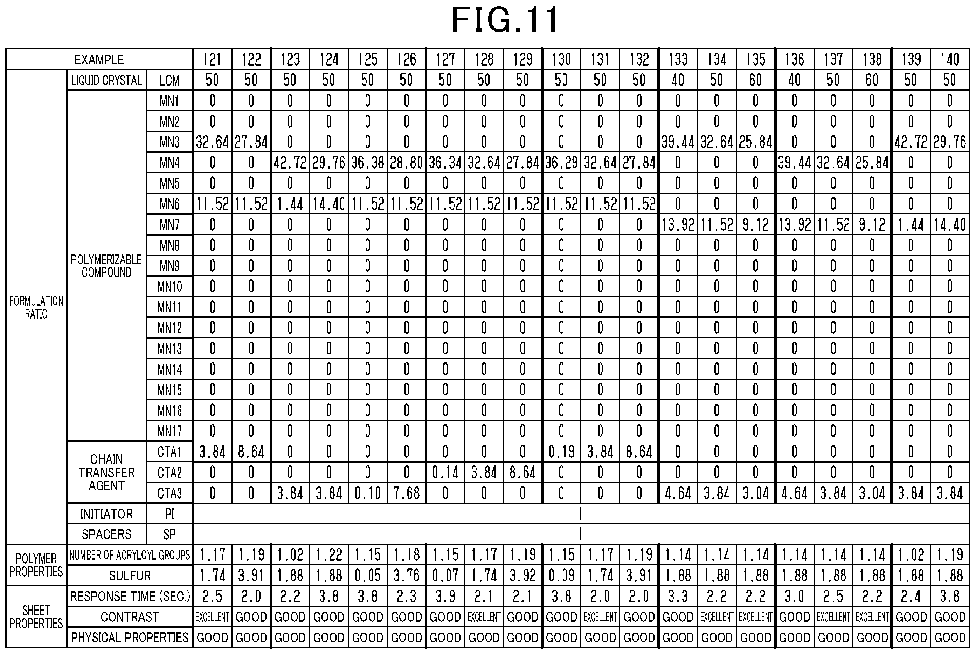

As shown in Figs. 10 and 11, the light control sheets 11N of Examples 120 to 122 were obtained as in Examples 117 to 119 except that 27.84 mass% or more and 36.29 mass% or less Component MN3 was used and 0.19 mass% or more and 8.64 mass% or less Component CTA1 was used instead of Component CTA2.

### [Examples 123 to 126]

As shown in Fig. 11, the light control sheets 11N of Examples 123 to 126 were obtained as in Examples 113 to 116 except that 28.80 mass% or more and 42.72 mass% or less Component MN4 was used instead of Component MN3.

### [Examples 127 to 129]

As shown in Fig. 11, the light control sheets 11N of Examples 127 to 129 were obtained as in Examples 117 to 119 except that 27.84 mass% or more and 36.34 mass% or less Component MN4 was used.

### [Examples 130 to 132]

As shown in Fig. 11, the light control sheets 11N of Examples 130 to 132 were obtained as in Examples 127 to 129 except that 27.84 mass% or more and 36.29 mass% or less Component MN4 and 0.19 mass% or more and 8.64 mass% or less Component CTA1 were used.

### [Examples 133 to 135]

As shown in Fig. 11, the light control sheets 11N of Examples 133 to 135 were obtained as in Examples 3 to 5 except that 25.84 mass% or more and 39.44 mass% or less Component MN3 was used and 9.12 mass% or more and 13.92 mass% or less Component MN7 was used instead of Component MN14.

### [Examples 136 to 138]

As shown in Fig. 11, the light control sheets 11N of Examples 136 to 138 were obtained as in Examples 133 to 135 except that 25.84 mass% or more and 39.44 mass% or less Component MN4 was used instead of Component MN3.

### [Examples 139 to 142]

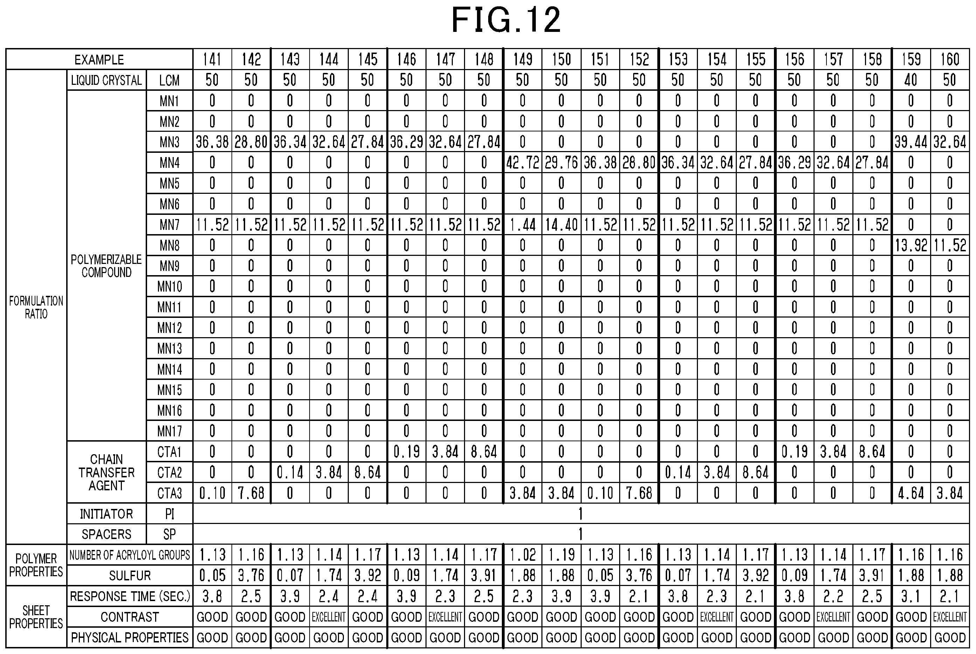

As shown in Figs. 11 and 12, the light control sheets 11N of Examples 139 to 142 were obtained as in Examples 9 to 12 except that 28.80 mass% or more and 42.72 mass% or less Component MN3 was used and 1.44 mass% or more and 14.40 mass% or less Component MN7 was used instead of Component MN14.

### [Examples 143 to 145]

As shown in Fig. 12, the light control sheets 11N of Examples 143 to 145 were obtained as in Examples 13 to 15 except that 27.84 mass% or more and 36.34 mass% or less Component MN3 was used and 11.52 mass% Component MN7 was used instead of Component MN14.

### [Examples 146 to 148]

As shown in Fig. 12, the light control sheets 11N of Examples 146 to 148 were obtained as in Examples 143 to 145 except that 27.84 mass% or more and 36.29 mass% or less Component MN3 was used and 0.19 mass% or more and 8.64 mass% or less Component CTA1 was used instead of Component CTA2.

### [Examples 149 to 152]

As shown in Fig. 12, the light control sheets 11N of Examples 149 to 152 were obtained as in Examples 139 to 142 except that 28.80 mass% or more and 42.72 mass% or less Component MN4 was used instead of Component MN3.

### [Examples 153 to 155]

As shown in Fig. 12, the light control sheets 11N of Examples 153 to 155 were obtained as in Examples 143 to 145 except that 27.84 mass% or more and 36.34 mass% or less Component MN4 was used instead of Component MN3.

### [Examples 156 to 158]

As shown in Fig. 12, the light control sheets 11N of Examples 156 to 158 were obtained as in Examples 153 to 155 except that 27.84 mass% or more and 36.29 mass% or less Component MN4 was used and 0.19 mass% or more and 8.64 mass% or less Component CTA1 was used instead of Component CTA2.

### [Examples 159 to 161]

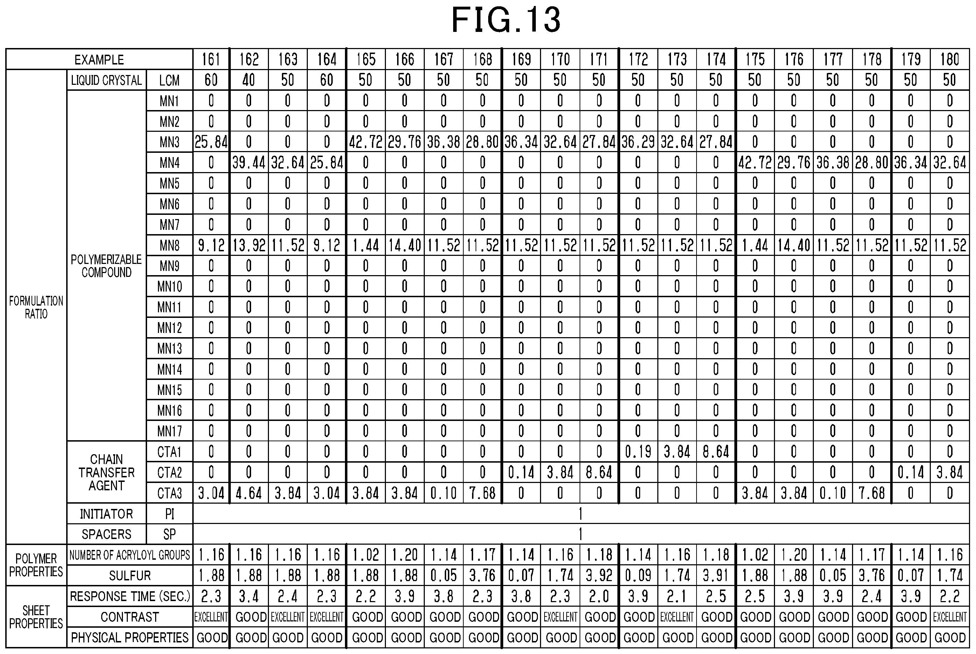

As shown in Figs. 12 and 13, the light control sheets 11N of Examples 159 to 161 were obtained as in Examples 3 to 5 except that 25.84 mass% or more and 39.44 mass% or less Component MN3 was used and 9.12 mass% or more and 13.92 mass% or less Component MN8 was used instead of Component MN14.

### [Examples 162 to 164]

As shown in Fig. 13, the light control sheets 11N of Examples 162 to 164 were obtained as in Examples 159 to 161 except that 25.84 mass% or more and 39.44 mass% or less Component MN4 was used instead of Component MN3.

### [Examples 165 to 168]

As shown in Fig. 13, the light control sheets 11N of Examples 165 to 168 were obtained as in Examples 9 to 12 except that 28.80 mass% or more and 42.72 mass% or less Component MN3 was used and 1.44 mass% or more and 14.40 mass% or less Component MN8 was used instead of Component MN14.

### [Examples 169 to 171]

As shown in Fig. 13, the light control sheets 11N of Examples 169 to 171 were obtained as in Examples 13 to 15 except that 27.84 mass% or more and 36.34 mass% or less Component MN3 was used and 11.52 mass% Component MN8 was used instead of Component MN4.

### [Examples 172 to 174]

As shown in Fig. 13, the light control sheets 11N of Examples 172 to 174 were obtained as in Examples 169 to 171 except that 27.84 mass% or more and 36.29 mass% or less Component MN3 was used and 0.19 mass% or more and 8.64 mass% or less Component CTA1 was used instead of Component CTA2.

### [Examples 175 to 178]

As shown in Fig. 13, the light control sheets 11N of Examples 175 to 178 were obtained as in Examples 165 to 168 except that 28.80 mass% or more and 42.72 mass% or less Component MN4 was used instead of Component MN3.

### [Examples 179 to 181]

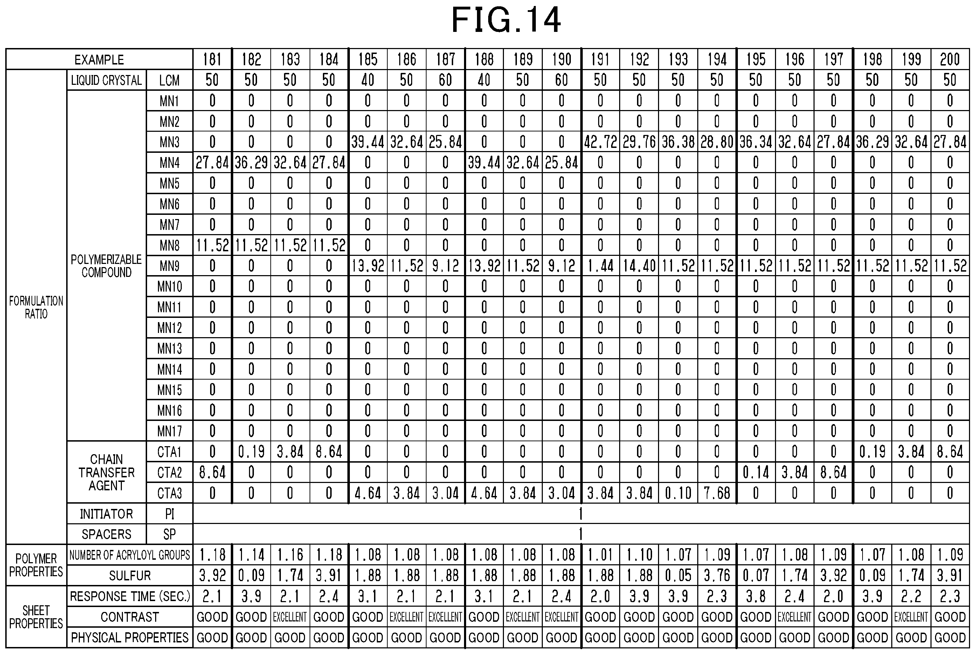

As shown in Figs. 13 and 14, the light control sheets 11N of Examples 179 to 181 were obtained as in Examples 169 to 171 except that 27.84 mass% or more and 36.34 mass% or less Component MN4 was used instead of Component MN3.

### [Examples 182 to 184]

As shown in Fig. 14, the light control sheets 11N of Examples 182 to 184 were obtained as in Examples 179 to 181 except that 27.84 mass% or more and 36.29 mass% or less Component MN4 was used and 0.19 mass% or more and 8.64 mass% or less Component CTA1 was used instead of Component CTA2.

### [Examples 185 to 187]

As shown in Fig. 14, the light control sheets 11N of Examples 185 to 187 were obtained as in Examples 3 to 5 except that 25.84 mass% or more and 39.44 mass% or less Component MN3 was used and 9.12 mass% or more and 13.92 mass% or less Component MN9 was used instead of Component MN14.

### [Examples 188 to 190]

As shown in Fig. 14, the light control sheets 11N of Examples 188 to 190 were obtained as in Examples 185 to 187 except that 25.84 mass% or more and 39.44 mass% or less Component MN4 was used instead of Component MN3.

### [Examples 191 to 194]

As shown in Fig. 14, the light control sheets 11N of Examples 191 to 194 were obtained as in Examples 9 to 12 except that 28.80 mass% or more and 42.72 mass% or less Component MN3 was used and 1.44 mass% or more and 14.40 mass% or less Component MN9 was used instead of Component MN14.

### [Examples 195 to 197]

As shown in Fig. 14, the light control sheets 11N of Examples 195 to 197 were obtained as in Examples 13 to 15 except that 27.84 mass% or more and 36.34 mass% or less Component MN3 was used and 11.52 mass% Component MN9 was used instead of Component MN14.

### [Examples 198 to 200]

As shown in Fig. 14, the light control sheets 11N of Examples 198 to 200 were obtained as in Examples 195 to 197 except that 27.84 mass% or more and 36.29 mass% or less Component MN3 was used and 0.19 mass% or more and 8.64 mass% or less Component CTA1 was used instead of Component CTA2.

### [Examples 201 to 204]

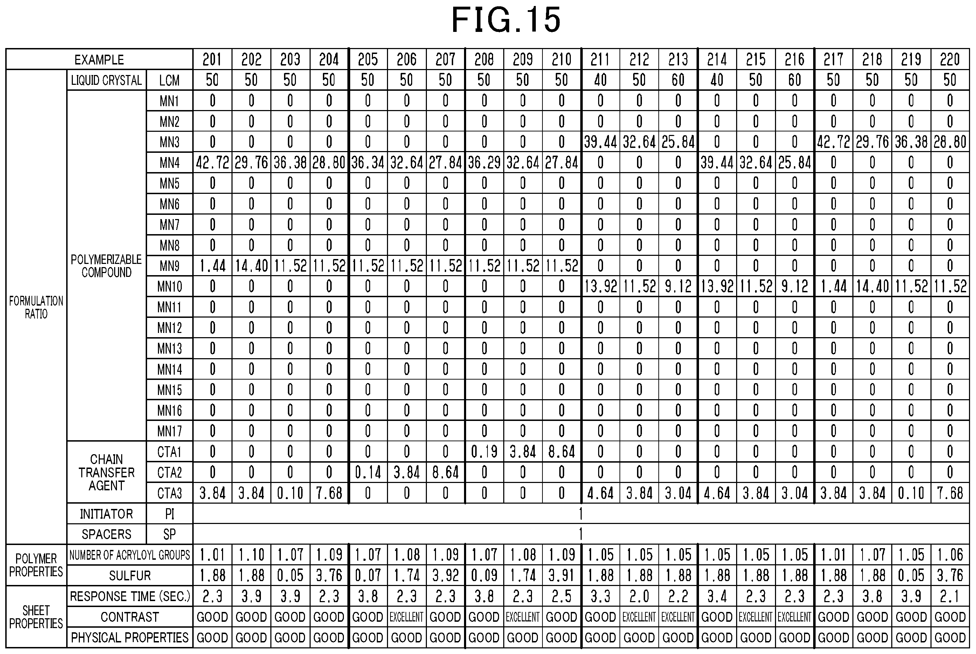

As shown in Fig. 15, the light control sheets 11N of Examples 201 to 204 were obtained as in Examples 191 to 194 except that 28.80 mass% or more and 42.72 mass% or less Component MN4 was used instead of Component MN3.

### [Examples 205 to 207]

As shown in Fig. 15, the light control sheets 11N of Examples 205 to 207 were obtained as in Examples 195 to 197 except that 27.84 mass% or more and 36.34 mass% or less Component MN4 was used instead of Component MN3.

### [Examples 208 to 210]

As shown in Fig. 15, the light control sheets 11N of Examples 208 to 210 were obtained as in Examples 205 to 207 except that 27.84 mass% or more and 36.29 mass% or less Component MN4 was used and 0.19 mass% or more and 8.64 mass% or less Component CTA1 was used instead of Component CTA2.

### [Examples 211 to 213]

As shown in Fig. 15, the light control sheets 11N of Examples 211 to 213 were obtained as in Examples 3 to 5 except that 25.84 mass% or more and 39.44 mass% or less Component MN3 was used and 9.12 mass% or more and 13.92 mass% or less Component MN10 was used instead of Component MN14.

### [Examples 214 to 216]

As shown in Fig. 15, the light control sheets 11N of Examples 214 to 216 were obtained as in Examples 211 to 213 except that 25.84 mass% or more and 39.44 mass% or less Component MN4 was used instead of Component MN3.

### [Examples 217 to 220]

As shown in Fig. 15, the light control sheets 11N of Examples 217 to 220 were obtained as in Examples 9 to 12 except that 28.80 mass% or more and 42.72 mass% or less Component MN3 was used and 1.44 mass% or more and 14.40 mass% or less Component MN10 was used instead of Component MN14.

### [Examples 221 to 223]

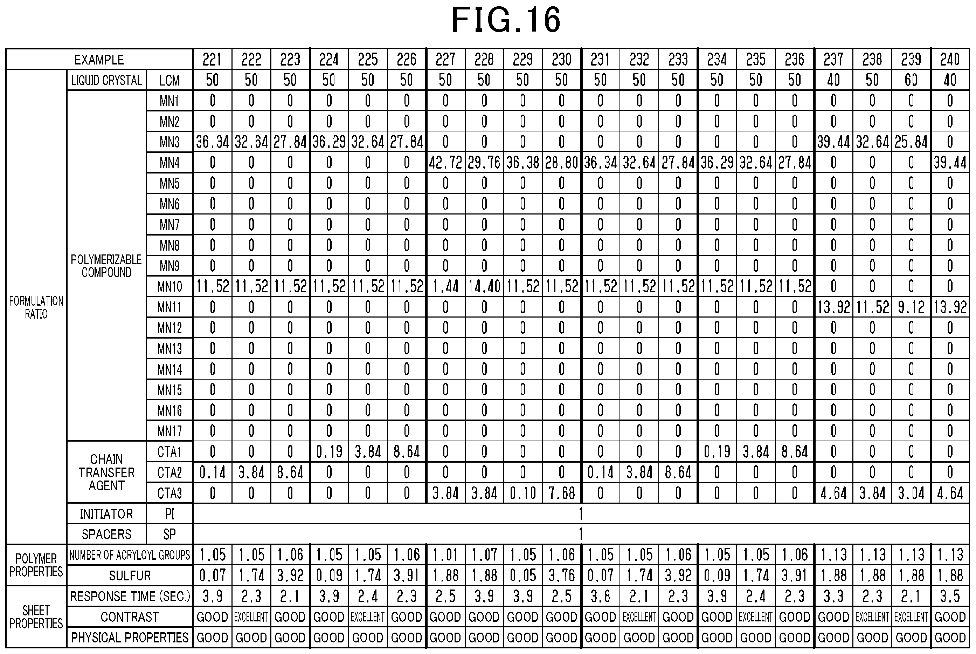

As shown in Fig. 16, the light control sheets 11N of Examples 221 to 223 were obtained as in Examples 13 to 15 except that 27.84 mass% or more and 36.34 mass% or less Component MN3 was used and 11.52 mass% Component MN10 was used instead of Component MN14.

### [Examples 224 to 226]

As shown in Fig. 16, the light control sheets 11N of Examples 224 to 226 were obtained as in Examples 221 to 223 except that 27.84 mass% or more and 36.29 mass% or less Component MN3 was used and 0.19 mass% or more and 8.64 mass% or less Component CTA1 was used instead of Component CTA2.

### [Examples 227 to 230]

As shown in Fig. 16, the light control sheets 11N of Examples 227 to 230 were obtained as in Examples 217 to 220 except that 28.80 mass% or more and 42.72 mass% or less Component MN4 was used instead of Component MN3.

### [Examples 231 to 233]

As shown in Fig. 16, the light control sheets 11N of Examples 231 to 233 were obtained as in Examples 221 to 223 except that 27.84 mass% or more and 36.34 mass% or less Component MN4 was used instead of Component MN3.

### [Examples 234 to 236]

As shown in Fig. 16, the light control sheets 11N of Examples 234 to 236 were obtained as in Examples 231 to 233 except that 27.84 mass% or more and 36.29 mass% or less Component MN4 was used and 0.19 mass% or more and 8.64 mass% or less Component CTA1 was used instead of Component CTA2.

### [Examples 237 to 239]

As shown in Fig. 16, the light control sheets 11N of Examples 237 to 239 were obtained as in Examples 3 to 5 except that 25.84 mass% or more and 39.44 mass% or less Component MN3 was used and 9.12 mass% or more and 13.92 mass% or less Component MN11 was used instead of Component MN14.

### [Examples 240 to 242]

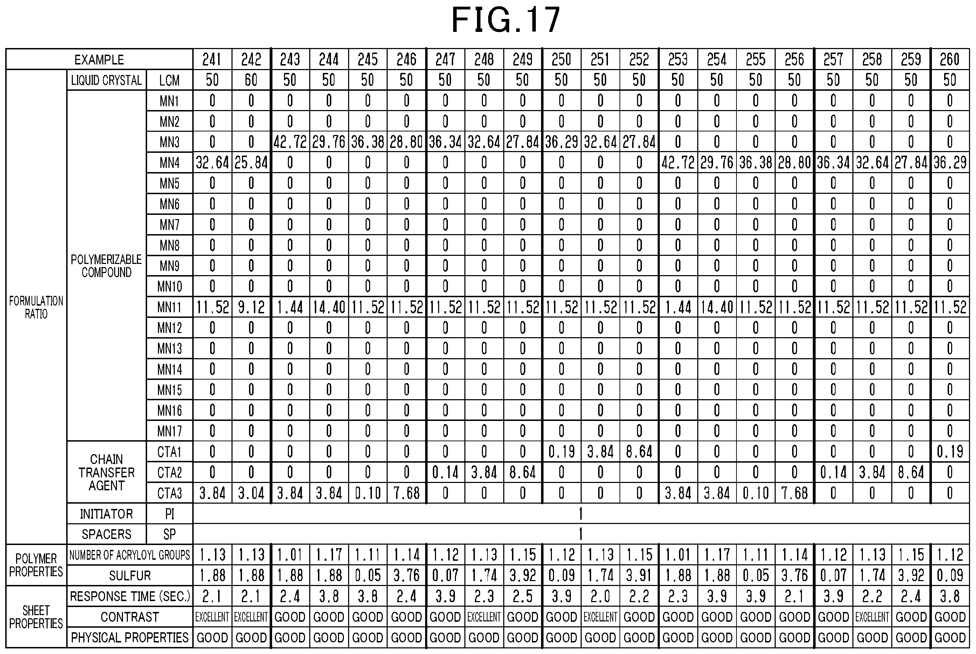

As shown in Figs. 16 and 17, the light control sheets 11N of Examples 240 to 242 were obtained as in Examples 237 to 239 except that 25.84 mass% or more and 39.44 mass% or less Component MN4 was used instead of Component MN3.

### [Examples 243 to 246]

As shown in Fig. 17, the light control sheets 11N of Examples 243 to 246 were obtained as in Examples 9 to 12 except that 28.80 mass% or more and 42.72 mass% or less Component MN3 was used and 1.44 mass% or more and 14.40 mass% or less Component MN11 was used instead of Component MN14.

### [Examples 247 to 249]

As shown in Fig. 17, the light control sheets 11N of Examples 247 to 249 were obtained as in Examples 13 to 15 except that 27.84 mass% or more and 36.34 mass% or less Component MN3 was used and 11.52 mass% Component MN11 was used instead of Component MN14.

### [Examples 250 to 252]

As shown in Fig. 17, the light control sheets 11N of Examples 250 to 252 were obtained as in Examples 247 to 249 except that 27.84 mass% or more and 36.29 mass% or less Component MN3 was used and 0.19 mass% or more and 8.64 mass% or less Component CTA1 was used instead of Component CTA2.

### [Examples 253 to 256]

As shown in Fig. 17, the light control sheets 11N of Examples 253 to 256 were obtained as in Examples 243 to 246 except that 28.80 mass% or more and 42.72 mass% or less Component MN4 was used instead of Component MN3.

### [Examples 257 to 259]

As shown in Fig. 17, the light control sheets 11N of Examples 257 to 259 were obtained as in Examples 247 to 249 except that 27.84 mass% or more and 36.34 mass% or less Component MN4 was used instead of Component MN3.

### [Examples 260 to 262]

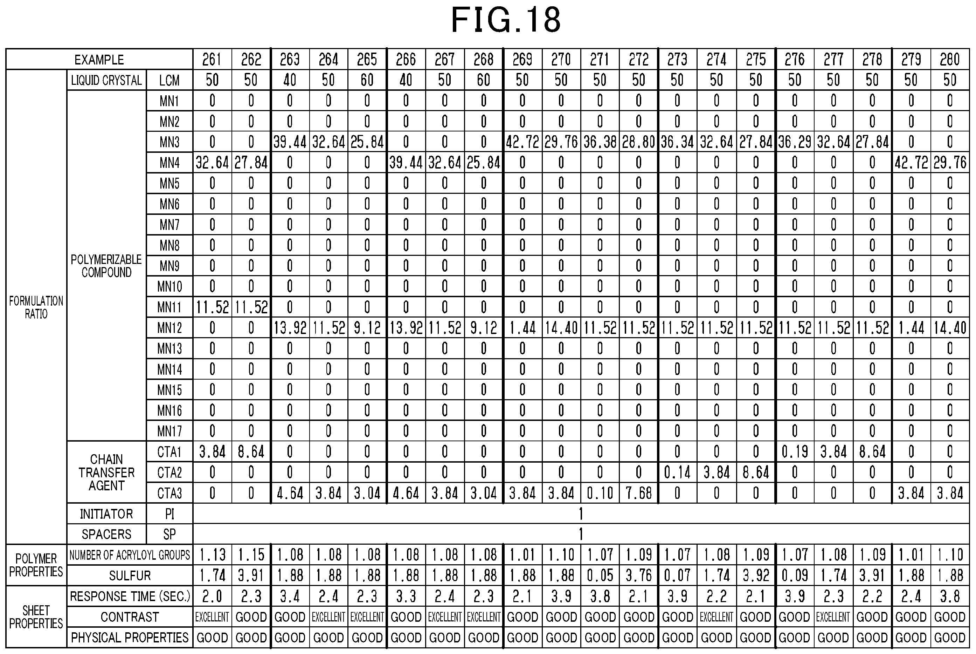

As shown in Figs. 17 and 18, the light control sheets 11N of Examples 260 to 262 were obtained as in Examples 257 to 259 except that 27.84 mass% or more and 36.29 mass% or less Component MN4 was used and 0.19 mass% or more and 8.64 mass% or less Component CTA1 was used instead of Component CTA2.

### [Examples 263 to 265]

As shown in Fig. 18, the light control sheets 11N of Examples 263 to 265 were obtained as in Examples 3 to 5 except that 25.84 mass% or more and 39.44 mass% or less Component MN3 was used and 9.12 mass% or more and 13.92 mass% or less Component MN12 was used instead of Component MN14.

### [Examples 266 to 268]

As shown in Fig. 18, the light control sheets 11N of Examples 266 to 268 were obtained as in Examples 263 to 265 except that 25.84 mass% or more and 39.44 mass% or less Component MN4 was used instead of Component MN3.

### [Examples 269 to 272]

As shown in Fig. 18, the light control sheets 11N of Examples 269 to 272 were obtained as in Examples 9 to 12 except that 28.80 mass% or more and 42.72 mass% or less Component MN3 was used and 1.44 mass% or more and 14.40 mass% or less Component MN12 was used instead of Component MN14.

### [Examples 273 to 275]

As shown in Fig. 18, the light control sheets 11N of Examples 273 to 275 were obtained as in Examples 13 to 15 except that 27.84 mass% or more and 36.34 mass% or less Component MN3 was used and 11.52 mass% Component MN12 was used instead of Component MN14.

### [Examples 276 to 278]

As shown in Fig. 18, the light control sheets 11N of Examples 276 to 278 were obtained as in Examples 273 to 275 except that 27.84 mass% or more and 36.29 mass% or less Component MN3 was used and 0.19 mass% or more and 8.64 mass% or less Component CTA1 was used instead of Component CTA2.

### [Examples 279 to 282]

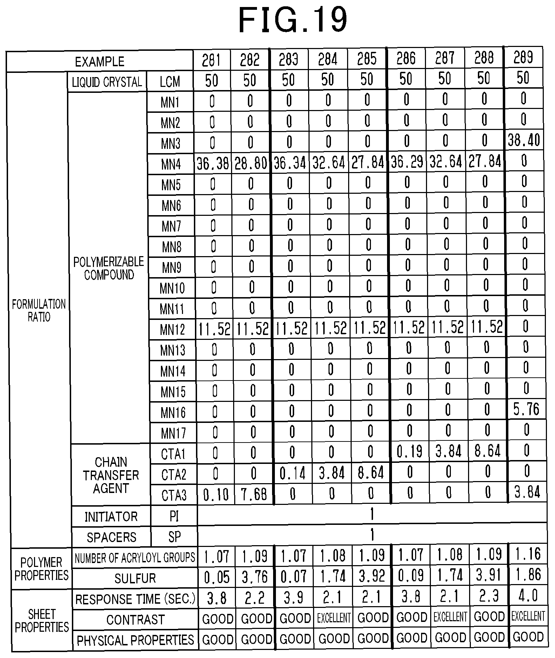

As shown in Figs. 18 and 19, the light control sheets 11N of Examples 279 to 282 were obtained as in Examples 269 to 272 except that 28.80 mass% or more and 42.72 mass% or less Component MN4 was used instead of Component MN3.

### [Examples 283 to 285]

As shown in Fig. 19, the light control sheets 11N of Examples 283 to 285 were obtained as in Examples 273 to 275 except that 27.84 mass% or more and 36.34 mass% or less Component MN4 was used instead of Component MN3.

### [Examples 286 to 288]

As shown in Fig. 19, the light control sheets 11N of Examples 286 to 288 were obtained as in Examples 283 to 285 except that 27.84 mass% or more and 36.29 mass% or less Component MN4 was used and 0.19 mass% or more and 8.64 mass% or less Component CTA1 was used instead of Component CTA2.

### [Example 289]

As shown in Fig. 19, the light control sheet 11N of Example 289 was obtained as in Example 61 except that 38.40 mass% Component MN3 and 5.76 mass% Component MN16 were used.

### [Comparative Examples 1 to 3]

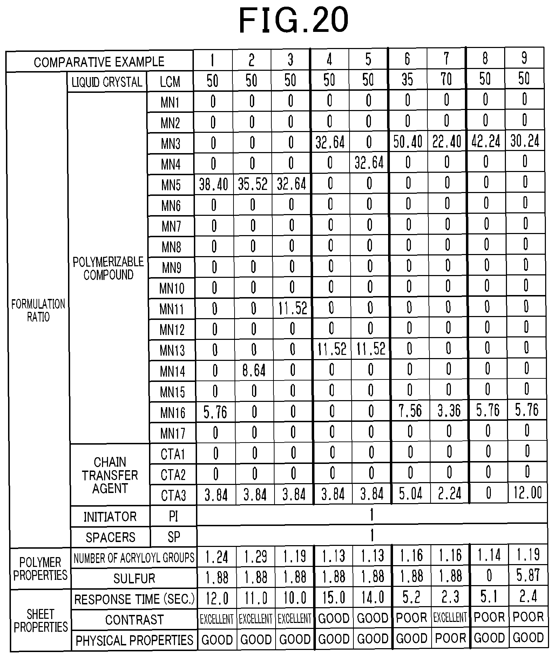

As shown in Fig. 20, the light control sheets 11N of Comparative Examples 1 to 3 were obtained as in Example 1 except that 38.40 mass% Component MN5 and 5.76 mass% Component MN16, 35.52 mass% Component MN5 and 8.64 mass% Component MN14, or 32.64 mass% Component MN5 and 11.52 mass% Component MN11 were used.

### [Comparative Examples 4 and 5]

As shown in Fig. 20, the light control sheets 11N of Comparative Examples 4 and 5 were obtained as in Example 1 except that 32.64 mass% Component MN3 or 32.64 mass% Component MN4, and 11.52 mass% Component MN13 were used.

### [Comparative Example 6]

As shown in Fig. 20, the light control sheet 11N of Comparative Example 6 was obtained as in Example 1 except that 35 mass% liquid crystal mixture LCM, 50.40 mass% Component MN3, 7.56 mass% Component MN16, and 5.04 mass% Component CTA3 were used.

### [Comparative Example 7]

As shown in Fig. 20, the light control sheet 11N of Comparative Example 7 was obtained as in Example 1 except that 70 mass% liquid crystal mixture LCM, 22.40 mass% Component MN3, 3.36 mass% Component MN16, and 2.24 mass% Component CTA3 were used.

### [Comparative Example 8]

As shown in Fig. 20, the light control sheet 11N of Comparative Example 8 was obtained as in Example 1 except that 42.24 mass% Component MN3 was used, 5.76 mass% Component MN16 was used instead of Component MN14, and Components CTA1 to CTA3 were not used.

### [Comparative Example 9]

As shown in Fig. 20, the light control sheet 11N of Comparative Example 9 was obtained as in Example 1 except that 30.24 mass% Component MN3 was used, 5.76 mass% Component MN16 was used instead of Component MN14, and 12.00 mass% Component CTA3 was used.

### [Evaluation method]

### [Response time]

For each of the light control sheets 11N of the examples and comparative examples, the time required for the light control sheet 11N to switch from opaque to transparent was measured as a response time for the ON operation. In this case, the temperature of the environment where the light control sheet 11N was installed was set to -20°C. The time required for the light control sheet 11N to switch from opaque to transparent is the time required for the haze of the light control sheet 11N to stabilize after start of application of the drive voltage.

### [Contrast]

For each of the light control sheets 11N of the Examples and Comparative Examples, the haze in an opaque state, i.e., when not energized, and the haze in a transparent state, i.e., when energized, were measured at 23°C. In this case, the haze of each light control sheet 11N was measured according to a method based on JIS K 7136: 2000 "Plastics-Determination of haze for transparent materials".

Subsequently, the measured haze of each of the light control sheets 11N of the Examples and Comparative Examples was substituted into the following formula to calculate a contrast for each of the light control sheets 11N of the Examples and Comparative Examples.$\left(Contrast\right) = \left(Haze in opaque state\right) / \left(Haze in transparent state\right)$

The contrast value was evaluated at the following three criteria.
Less than 7: Poor: Sufficient contrast was not achieved.
7 or more and less than 10: Good: Good contrast was achieved.
10 or more: Excellent: Superior contrast was achieved.

### [Physical properties]

Physical properties of each light control sheet 11N were evaluated at the following criteria. Physical properties of each light control sheet 11N were evaluated according to the following method. First, each light control sheet was held with hands at opposing edges of the first and second transparent conductive sheets 21 and 22. Next, with the second transparent conductive sheet 22 fixed to the table, the edges of the first transparent conductive sheet 21 were lifted by 2 mm to visually examine whether peeling of 2 cm or more progressed from the edges of the first transparent conductive sheet 21 toward the inside of the light control sheet 11N.
Good: Peeling toward the inside of the light control sheet 11N was less than 2 cm.
Poor: Peeling toward the inside of the light control sheet 11N was 2 cm or more.

### [Results of evaluation]

Figs. 5 to 20 show the results of evaluation of response time, contrast, and physical properties for the light control sheets of the Examples and Comparative Examples.

While the results of evaluation of physical properties for the light control sheets 11N of the respective Examples were Good, the results of evaluation of physical properties for the light control sheet 11N of Comparative Example 7 were Poor. Considering these results, it can be said that the upper content limit of the liquid crystal mixture LCM is preferably 60 mass%, from the perspective of suppressing occurrence of peeling in the light control sheets 11N.

While the results of evaluation of contrast for the light control sheets 11N of the respective Examples were Good or Excellent, the results of evaluation of contrast for the light control sheet 11N of Comparative Example 6 were Poor. Considering these results, it can be said that the lower content limit of the liquid crystal mixture LCM is preferably 40 mass%, from the perspective of enhancing contrast of the light control sheets 11N. Considering these results of evaluation of contrast for the light control sheets 11N of the respective Examples, it can be said that the lower content limit of the liquid crystal mixture LCM is more preferably 50 mass%, from the perspective of enhancing contrast of the light control sheets 11N.

While the response time of the light control sheets 11N of the respective Examples was 4.0 seconds or less, the response time of the light control sheet 11N of Comparative Example 6 was 5.2 seconds. Considering these results, it can be said that the lower content limit of the liquid crystal mixture LCM is preferably 40 mass%, from the perspective of enhancing responsiveness of the light control sheets 11N under a low-temperature environment.

In this way, it can be said that the content of the liquid crystal mixture LCM is preferably 40 mass% or more and 60 mass% or less, and more preferably 50 mass% or more and 60 mass% or less, from the perspective of satisfying all of: enhancing responsiveness of the light control sheets 11N under a low-temperature environment; enhancing contrast of the light control sheets 11N; and enhancing physical properties of the light control sheets 11N.

While the response time of the light control sheets 11N of the respective Examples was 4.0 seconds or less, the response time of the light control sheets 11N of Comparative Examples 1 to 5 was 10.0 seconds or more. Considering these results, it can be said that, when the transparent polymer layer 23P provided to the light control sheet 11N includes no cyclic structure, responsiveness of the light control sheets 11N can be enhanced under a low-temperature environment.

While the results of evaluation of contrast for the light control sheets 11N of the respective Examples were Good or Excellent, the results of evaluation of contrast for the light control sheets 11N of Comparative Examples 8 and 9 were Poor. Considering these results, it can be said that the content of the sulfur atoms in the transparent polymer layer 23P is preferably 0.04 mass% or more and 4.0 mass% or less, from the perspective of enhancing contrast of the light control sheets 11N.

The response time of the light control sheets 11N for the respective Examples was 4.0 seconds or less. Thus, the average number of acryloyl groups is preferably 1.55 or less, and more preferably 1.5 or less. Considering these results of evaluation of response time for the light control sheets 11N of the respective Examples, assuming that the content of the liquid crystal mixture LCM is unchanged, it can be said that the ratio of the content of the sulfur atoms to the average number of acryloyl groups is preferably larger, from the perspective of enhancing responsiveness of the light control sheets 11N.

From the perspective of enhancing responsiveness of the light control sheets 11N, the lower limit ratio of the content of the sulfur atoms to the average number of acryloyl groups is preferably 1.0 or more, more preferably 1.4 or more, and even more preferably 1.5 or more. From the perspective of enhancing contrast of the light control sheets 11N, the upper limit ratio of the content of the sulfur atoms to the average number of acryloyl groups is preferably 4.0 or less, more preferably 3.5 or less, and even more preferably 2.0 or less.

As described above, according to an embodiment of the light control sheet and the vehicle window, the following effects can be achieved.
(1) Since the polymer compound does not include a cyclic structure, intermolecular forces are suppressed from acting between the liquid crystal mixture LCM and the polymer compound under a low-temperature environment. Accordingly, it becomes easier to drive the liquid crystal compound under a low-temperature environment.
(2) Since the lower content limit of the liquid crystal mixture LCM is 40 mass%, light is easily scattered in the light control sheet 11N or 11R to an extent that the light control sheet 11N or 11R exhibits a high contrast. Since the upper content limit of the liquid crystal mixture LCM is 65 mass%, the adhesion strength between the light control layer 23 and the transparent conductive sheet 21 or 22 can be maintained at a high level by the transparent polymer layer 23P contained in the light control layer 23.
(3) Since the lower content limit of the sulfur atoms in the transparent polymer layer 23P is 0.03 mass%, the size of the voids 23D formed in the transparent polymer layer 23P is less likely to vary, resulting in the degree to which in-plane light scattering occurs being less likely to vary in the light control sheet 11N or 11R. Furthermore, since the upper content limit of the sulfur atoms in the transparent polymer layer 23P is 4 mass%, curing speed of the transparent polymer layer 23P is suppressed from becoming excessively low. Therefore, excessive increase in size of the voids 23D formed in the transparent polymer layer 23P and excessive decrease in the number of the voids 23D can be suppressed, thereby suppressing decrease in area of the interface between the transparent polymer layer 23P and the voids 23D, resultantly suppressing decrease in occurrence of light scattering.
(4) Since the transparent polymer layer 23P contains a larger number of first repeat units than the second repeat units and each first repeat unit has a smaller number of acryloyl groups than each second repeat unit, excessive increase in the average number of acryloyl groups can be suppressed in the transparent polymer layer 23P. Accordingly, excessive increase in curing speed of the transparent polymer layer 23P can be suppressed.
(5) Since the proportion of the second repeat units to the first repeat units can be suppressed to about 1/2 at most in the transparent polymer layer 23P, excessive increase in the average number of acryloyl groups in the transparent polymer layer 23P can be further suppressed.
(6) When the average number of acryloyl groups is 1.5 or less, excessive increase in curing speed of the transparent polymer layer 23P can be suppressed. Thus, in the liquid crystal composition 23LC contained in the voids 23D of the transparent polymer layer 23P, decrease in purity of the liquid crystal mixture LCM is suppressed. Consequently, driving of the liquid crystal mixture LCM is less likely to be prevented by the impurities in the liquid crystal composition 23LC.

## Claims

1. A light control sheet comprising
a first transparent conductive sheet that includes a first transparent electrode layer;
a second transparent conductive sheet that includes a second transparent electrode layer; and
a light control layer that is located between the first transparent electrode layer of the first transparent conductive sheet and the second transparent electrode layer of the second transparent conductive sheet,
the light control sheet being configured so that the light control layer can be switched between a transparent state and an opaque state by switching between application and non-application of voltage between the first transparent electrode layer of the first transparent conductive sheet and the second transparent electrode layer of the second transparent conductive sheet, wherein
the light control layer contains a transparent polymer layer that defines a plurality of voids, and a liquid crystal composition that contains at least one liquid crystal compound and is filled in the voids;
a mass content of the liquid crystal compound relative to that of the light control layer is 40 mass% or more and 65 mass% or less;
a mass content of sulfur atoms relative to that of the transparent polymer layer is 0.03 mass% or more and 4 mass% or less; and
the transparent polymer layer contains a polymer compound expressed by the following Chemical Formula (1) in which X does not include a cyclic structure 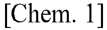 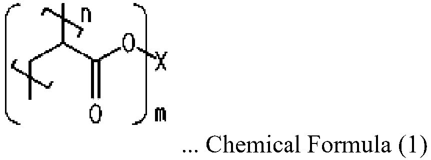 where n is an integer greater than or equal to 1, m is an integer between 1 and 4, and X is straight or branched and includes no functional group or includes at least one of or both of an ether group and an ester group as a functional group.

2. The light control sheet according to claim 1, wherein
the transparent polymer layer contains at least one type of first repeat units and at least one type of second repeat units; and
in the first repeat units, X in Chemical Formula (1) has a straight or branched carbon chain, contains no functional group or contains at least one of or both of an ether group and an ester group as a functional group, and m is 1, and in the second repeat units, X in Chemical Formula (1) is expressed by any of the following Chemical Formulas (2) to (7)
[Chem. 2]
-CₙₐH₂ₙₐ- ... Chemical Formula (2)
where na is an integer between 2 and 9, and when X in Chemical Formula (1) is expressed by Chemical Formula (2), m in Chemical Formula (1) is 2, 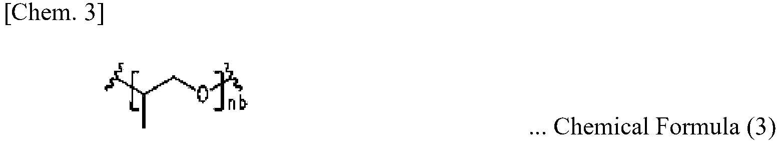 where nb is an integer between 2 and 12, and when X in Chemical Formula (1) is expressed by Chemical Formula (3), m in Chemical Formula (1) is 2, 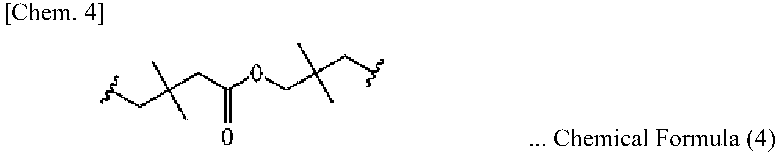 where when X in Chemical Formula (1) is expressed by Chemical Formula (4), m in Chemical Formula (1) is 2, 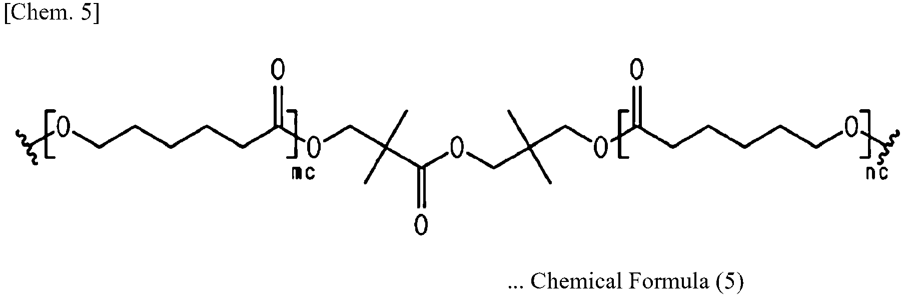 where mc and nc are each an integer greater than or equal to 1, and a sum of mc and nc is 2 or 4, and when X in Chemical Formula (1) is expressed by Chemical Formula (5), m in Chemical Formula (1) is 2, 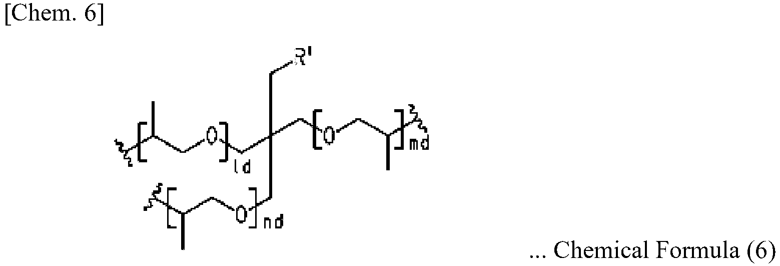 where R¹ is a hydrogen atom or an alkyl group with 1 to 5 carbons, and ld, md and nd are each an integer 0 or an integer greater than or equal to 1, and when X in Chemical Formula (1) is expressed by Chemical Formula (6), m in Chemical Formula (1) is 3, and 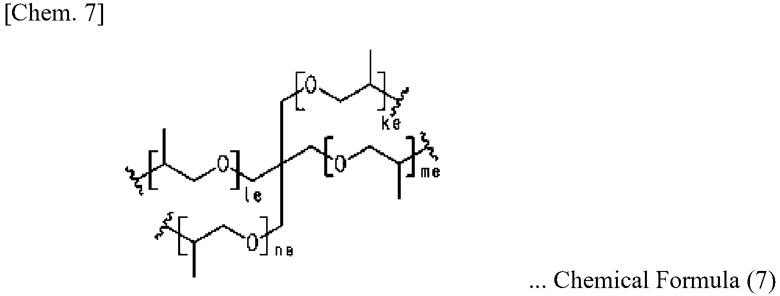 where ke, le, me and ne are each an integer 0 or an integer greater than or equal to 1, and when X in Chemical Formula (1) is expressed by Chemical Formula (7), m in Chemical Formula (1) is 4.

3. The light control sheet according to claim 2, wherein
a mass ratio of the first repeat units to the transparent polymer layer is greater than a mass ratio of the second repeat units to the transparent polymer layer.

4. The light control sheet according to claim 3, wherein
a mass content of the first repeat units relative to that of the transparent polymer layer is 26 mass% or more and 46 mass% or less; and
a mass content of the second repeat units relative to that of the transparent polymer layer is 1 mass% or more and 14 mass% or less.

5. The light control sheet according to claim 4, wherein
the first repeat units are derived from at least one material selected from a group consisting of methyl acrylate, ethyl acrylate, n-butyl acrylate, and t-butyl acrylate; and
the second repeat units are derived from at least one material selected from a group consisting of 1,6-hexanediol diacrylate, 1,9-nonanediol diacrylate, dipropylene glycol diacrylate, polypropylene glycol diacrylate, neopentyl glycol hydroxypivalic acid ester diacrylate, 6-(propenoyloxy)hexanoic acid 3-[2,2-dimethyl-3-[[1-oxo-6-(propenoyloxy)hexyl]oxy]propoxy]-2,2-dimethyl-3-oxopropyl, trimethylolpropane triacrylate, propoxylated trimethylolpropane triacrylate, pentaerythritol tetraacrylate, and propoxylated pentaerythritol tetraacrylate.

6. The light control sheet according to any one of claims 1 to 5, wherein
an average number of acryloyl groups fave expressed by the following Formula (1) is 1.5 or less
[Math. 1] ${f}_{ave} = {\sum }_{k = 1}^{n} {f}_{k} {n}_{k}$ where the number of acryloyl groups per molecule of the polymer compound k contained in the transparent polymer layer is fk, and a mole fraction of the polymer compound k relative to a total molar quantity of the polymer compound is nk.

7. The light control sheet according to claim 6, wherein
the average number of acryloyl groups fave is 1.2 or less.

8. The light control sheet according to any one of claims 1 to 5, wherein
the mass content of the liquid crystal compound is 50 mass% or more and 60 mass% or less; and
the mass content of the sulfur atoms is 1 mass% or more and 4 mass% or less.

9. The light control sheet according to any one of claims 1 to 5, wherein
the mass content of the liquid crystal compound is 50 mass% or more and 60 mass% or less; and
the mass content of the sulfur atoms is 0.03 mass% or more and 3 mass% or less.

10. The light control sheet according to any one of claims 1 to 5, wherein
the mass content of the liquid crystal compound is 50 mass% or more and 60 mass% or less; and
the mass content of the sulfur atoms is 1 mass% or more and 3 mass% or less.

11. The light control sheet according to claim 6, wherein
a ratio of the mass content of the sulfur atoms to the average number of acryloyl groups is 1.0 or more and 4.0 or less.

12. The light control sheet according to any one of claims 1 to 5, wherein
the liquid crystal composition contains a first liquid crystal compound and a second liquid crystal compound; and
a difference in refractive index between the first liquid crystal compound and the second liquid compound is 0.05 or more.

13. The light control sheet according to any one of claims 1 to 5, wherein
the light control layer has a thickness of 5 µm or more and 100 µm or less.

14. A vehicle window comprising
the light control sheet according to claim 10; and
a transparent component to which the light control sheet is attached.
